# EUROPEAN PATENT SPECIFICATION

(11) **EP 4 285 615 B1**
(45) Date of publication and mention of the grant of the patent: **20.11.2024**
(21) Application number: 22701946.0
(22) Date of filing: 21.01.2022
(51) Int. Cl.: H04W 4/029, H04W 4/80, H04W 4/33, H04W 4/38

(54) **RF-BASED SENSING WITH CONSISTENT LATENCY**
HF-BASIERTE ABTASTUNG MIT KONSISTENTER LATENZ
DÉTECTION BASÉE SUR RF À LATENCE CONSTANTE

(30) Priority: 27.01.2021 US 202163142134 P; 04.02.2021 EP 21155123
(43) Date of publication of application: 06.12.2023
(73) Proprietor: Signify Holding B.V., 5656 AE Eindhoven (NL)
(72) Inventor: DEIXLER, Peter, 5656 AE Eindhoven (NL); KRAJNC, Hugo, José, 5656 AE Eindhoven (NL)
(74) Representative: Verweij, Petronella Daniëlle
(86) International application number: PCT/EP2022/051372
(87) International publication number: WO 2022/161870

(56) References cited:
- WO-A1-2020/043592
- US-A1- 2019 227 975
- SMARTISANT LTD: "Smart Home Latency", SMARTISANT.COM, 22 December 2019 (2019-12-22), XP055822366, Retrieved from the Internet <URL:https://smartisant.com/research/latency/index.php> [retrieved on 20210708]

## Description

### FIELD OF THE INVENTION

The present invention relates to a radio frequency (RF) system for performing RF-based sensing and reacting to an event detected by the RF-based sensing with a consistent latency or at least with a latency within a latency range around the consistent latency, a corresponding method, and a corresponding computer program product.

### BACKGROUND OF THE INVENTION

RF-based sensing is used for detecting different type of sensing events in a sensing area, such as human motion or room-occupancy, e.g., used for controlling light settings, as well as more detailed human biometric features like a rate of breathing movements or human gait.

In the prior art, it is described how RF-based sensing is optimized in order to achieve low detection latency, e.g., by optimized node selection.

WO 2020/0043592 A1 shows a system for selecting one or more devices in a wireless network for transmitting, receiving and/or processing an RF signal for presence and/or location detection. The system comprises at least one processor configured to determine a suitability of each of a plurality of devices for transmitting, receiving and/or processing an RF signal for presence and/or location detection, select a subset of devices from the plurality of devices based on the suitability determined for each of the plurality of devices, and instruct at least one of the subset of devices to act as a device for transmitting, receiving and/or processing an RF signal for presence and/or location detection. When selecting the devices, the system may take into account lighting latency requirements.

### SUMMARY OF THE INVENTION

It can be seen as an object of the present invention to provide an RF system, a method, a computer program product, and a computer readable medium which allow performing RF-based sensing and reacting to an event detected by the RF-based sensing with a consistent latency or at least with a latency within a latency range around the consistent latency.

In a first aspect of the present invention an RF system for performing RF-based sensing and reacting to an event detected by the RF-based sensing with a consistent latency or at least with a latency within a latency range around the consistent latency is presented. The RF system comprises multiple nodes grouped in multiple groups, each of the groups configured for performing RF-based sensing in a respective sensing area of multiple sensing areas of the RF system. The RF system is configured for:
- determining a latency of two or more of the groups for performing RF-based sensing and reacting to the event detected by the RF-based sensing,
- determining the consistent latency based on the determined latencies, and
- adapting at least one of the two or more of the groups such that they perform RF-based sensing and react to the event detected by the RF-based sensing with the consistent latency or at least with a latency within a latency range around the consistent latency.

Since the RF system is configured for adapting the at least two or more of the groups such that they perform RF-based sensing and react to the event detected by the RF-based sensing with the consistent latency or at least with a latency within a latency range around the consistent latency, consistent latency across the at least two or more of the groups of the RF system may be achieved. The consistent latency may thus be achieved for a certain event, i.e., a certain sensing application and/or across certain groups of the RF system, e.g., all groups of the RF system.

The RF system may additionally be configured for determining the latency range around the consistent latency based on the determined latencies. Alternatively, the latency range may be predetermined.

The RF system may also be configured for adapting the groups of the RF system such that they perform RF-based sensing and react to the event detected by the RF-based sensing with the consistent latency or at least with a latency within a latency range around the consistent latency. In this case, since all groups are adapted, consistent latency across the entire RF system may be achieved. This allows users to experience a consistent latency across the entire RF system. Furthermore, the latency of the RF system may be optimized taking into account the latencies of different groups such that an overall latency improvement of the RF system may be achieved compared to optimizing latency for each group individually.

Alternatively or additionally, the RF system may be configured for determining a second consistent latency, a second latency range, or both for a second set of two or more of the groups. The second set of the two or more of the groups may consist of groups that have a specific characteristic, e.g., including a specific setting of configuration parameters, such as a gaming setting optimized for low latency gesture detection. The RF system may be configured for adapting the groups of the second set of the two or more of the groups such that they perform RF-based sensing and react to the event detected by the RF-based sensing with the second consistent latency, with a latency within the second latency range around the consistent latency, or with a latency within the second latency range around the second consistent latency. This allows for operating the RF system with different consistent latencies taking into account specific characteristics of different groups of nodes.

The latency for performing RF-based sensing and reacting to the event detected by the RF-based sensing corresponds to a latency for detecting the event and reacting to the detected event. The latency may include an RF-based sensing latency for detecting the event and a reaction latency for reacting to the detected event, e.g., by performing an action. For example, an event in form of a motion of a tangible entity, such as a user, may be detected and in reaction an action, such as activating lighting, may be performed.

The latency may be, for example, a current latency or a minimal latency. The current latency corresponds to a latency for performing RF-based sensing in a current context and with a current configuration of the RF system and reacting to the event detected by the RF-based sensing. The current configuration of the RF system depends on a current setting of configuration parameters of the RF system. The configuration parameters may include, for example, a messaging rate, a transmit power, a number of nodes in the groups, locations of the nodes in the groups, locations of the sensing areas, sizes of the sensing areas, or any other configuration parameter affecting RF-based sensing and/or reacting to the event detected by the RF-based sensing. The minimal latency corresponds to a latency for performing RF-based sensing in an optimized configuration of the RF system and reacting to the event detected by the RF-based sensing. The minimal latency may be the minimal latency for the current context or it may be the minimal latency for a specific context, e.g., a worst context in which the latency for the optimized configuration is higher than a latency for the optimized configuration for any other context, or a best context in which the latency for the optimized configuration is lower than any other latency for the optimized configuration for any other context. The minimal latency may correspond to a minimal achievable latency, e.g., for the current context or for a specific context, such as the worst context or the best context.

The consistent latency may be a well-balanced latency for all groups and all sensing applications, such that latency requirements for groups and/or sensing applications are fulfilled while also allowing an as small as possible latency range. The consistent latency may be, for example, between 0.1 s and 0.7 s, such as between 0.3 s and 0.5 s, e.g., equal to or below 0.5 s, or equal to or below 0.3 s.

The RF system may be configured for optimizing the latency of one or more groups with a latency equal to or above the consistent latency in order to minimize the latency range, the consistent latency, or both. Optimizing the latency of one or more groups with a latency equal to or above the consistent latency allows reducing the latency of this or the latencies of these groups. As the latency of this group or the latencies of these groups may be minimized, also the consistent latency, the latency range, or both may be minimized.

The RF system may be configured for optimizing the latency of the one or more groups with latency equal to or above the consistent latency based on one or more of:
- increasing a messaging rate,
- increasing transmit power,
- removing one or more nodes of the one or more groups with latency equal to or above the consistent latency,
- adding one or more nodes, e.g., of one or more other groups, to the one or more groups with latency equal to or above the consistent latency,
- reducing an RF-based sensing activity of one or more groups adjacent to the one or more groups with latency equal to or above the consistent latency, and
- rebalancing wireless communication traffic in order to reduce wireless interference caused by the wireless communication traffic. Optimizing the latency of the one or more groups with latency equal to or above the consistent latency may allow to minimize the latency range, the consistent latency, or both.

While the latencies of groups with latency equal to or above the consistent latency, may be lowered, the latency of groups with latency below the consistent latency may be increased in order to make the latencies of the groups more consistent, e.g., by minimizing the latency range and/or the consistent latency. Various measures may allow making the latencies of the groups more consistent.

Messaging rate corresponds to an amount of data, e.g., an amount of RF messages, transmitted between nodes in a certain duration. The RF messages may be used for performing RF-based sensing. The RF messages may also be used for transferring information, such as control commands for controlling operation of the nodes. For example, if an event is detected, control commands may be exchanged between the nodes, e.g., for performing an action in reaction to the detected event, such as activating lighting, in case that the nodes include, for example, luminaires. Increasing the messaging rate of the one or more groups with latency equal to or above the consistent latency may compensate missing a certain amount of RF messages. This may allow improving RF-based sensing.

The transmit power corresponds to an amount of power used for transmitting RF signals including RF messages between the nodes. A higher transmit power allows to increase the probability that information transmitted by one or more of the nodes of the one or more groups with latency equal to or above the consistent latency via the RF signals is correctly received by other nodes of the one or more groups with latency equal to or above the consistent latency. For example, if RF signals are transmitted with a transmit power equal to or lower than a noise level in the sensing area, the information may be lost due to the noise. Increasing the transmit power of the one or more groups with latency equal to or above the consistent latency may allow receiving the information even in a noisy environment.

RF-based sensing activity includes all activities for performing RF-based sensing. The RF-based sensing activity allows detecting one or more events based on performing RF-based sensing. A higher level of RF-based sensing activity may allow to detect events with higher confidence and/or faster. A wireless communication traffic caused in the RF system may be dependent on the RF-based sensing activity, e.g., a higher RF-based sensing activity may cause a higher wireless communication traffic. A higher wireless communication traffic may cause more wireless interference for neighboring sensing areas. RF-based sensing activity may be reduced, for example, by reducing messaging rate, reducing transmit power, reducing a number of nodes performing RF-based sensing, or changing any other parameter which allows to reduce wireless communication traffic caused by performing RF-based sensing. Removing one or more nodes of the one or more groups with latency equal to or above the consistent latency may allow reducing RF-based sensing activity as less information may need to be processed. A reduced RF-based sensing activity does not need to reduce detection performance of the RF-based sensing. For example, the removed node or nodes may process redundant information which does not improve the RF-based sensing but adds latency, e.g., as the removed nodes process the information slower than other nodes of the one or more groups with latency equal to or above the consistent latency. This may allow optimizing latency while maintaining detection performance, e.g., by reducing an amount of redundant information processed for performing RF-based sensing.

Adding one or more nodes to the one or more groups with latency equal to or above the consistent latency may add additional information and/or improve processing power of the one or more groups with latency equal to or above the consistent latency for performing RF-based sensing. For example, nodes with improved processing capabilities may be added. The added nodes may be nodes of other groups of the RF system, e.g., groups with latency below the consistent latency. This may allow improving detection performance of the RF-based sensing of the one or more groups with latency equal to or above the consistent latency and may reduce its latency or their latencies. The consistent latency, the latency range, or both, may be reduced since the latency of the one or more groups with latency equal to or above the consistent latency may be below the consistent latency after optimizing its latency or their latencies.

Rebalancing wireless communication traffic may include, for example, adapting a wireless network of the RF system, e.g., a mesh network. The wireless communication traffic may be reduced, for example, by locally reducing wireless communication traffic in a sensing area or sensing areas with the one or more of the groups with latency equal to or above the consistent latency, by reducing multiple hops in case of a mesh network, or by increasing directionality of RF messages used for directly communicating between nodes. This may allow reducing latency as well as wireless interference as redundant wireless communication may be reduced.

The RF system may be configured for determining a minimal latency of a group with a highest latency of the determined latencies of the two or more of the groups for performing RF-based sensing and reacting to the event detected by the RF-based sensing. Additionally, the RF system may be configured for determining the consistent latency, the latency range, or both based on the minimal latency. Since the minimal latency of a group with a highest latency of the determined latencies of the two or more groups is determined, a minimal consistent latency and/or latency range may be determined. The RF system may be configured for determining the minimal latency based on adapting the group with the highest latency to an optimized configuration, e.g., by increasing a messaging rate, increasing transmit power, adding or removing nodes, rebalancing wireless communication traffic of the group or other groups, reducing RF-based sensing activity of other groups, or a combination thereof. The RF system may be configured for optimizing configuration parameters of the RF system in order to minimize the latency of the group with the highest latency in order to optimize the configuration of the group. This allows to reduce the highest latency such that the consistent latency, the latency range, or both may be lowered, e.g., the consistent latency may subsequently be calculated as a second highest latency minus the latency range.

In case that the second highest latency is higher than the minimal latency of the group which previously had the highest latency, the minimal latency of the group with the second highest latency may be determined by optimization. This optimization process may be performed, e.g., iteratively, until the latency of the group with the highest latency cannot be reduced below the latencies of any other of the groups by optimization. This allows to determine a minimal consistent latency and/or latency range for the entire RF system by taking into account the effects of other groups, e.g., all groups.

The RF system may be configured for determining the minimal latency for the group with the highest latency based on a current context.

The RF system may be configured for determining the consistent latency, the latency range, or both based on a current context. Taking into account the current context for performing RF-based sensing and reacting to the event detected by the RF-based sensing allows to dynamically adjust the RF system and/or the groups in order to perform RF-based sensing and reacting to the event detected by the RF-based sensing with a consistent latency or at least with a latency within the latency range around the consistent latency.

The current context may include one or more of:
- a sensing application of one or more groups,
- a latency requirement of one or more groups,
- an expected event in one or more of the multiple sensing areas,
- a size of one or more of the sensing areas,
- a shape of one or more of the sensing areas,
- a radio power consumption requirement,
- a radio transmit power requirement,
- a radio beam shape requirement,
- a radio receive beamforming requirement,
- a current location of the RF system,
- a current location of at least one of the nodes,
- a current location of a tangible entity in the multiple sensing areas,
- characteristics of a tangible entity in one of the sensing areas,
- a current date,
- a current operation mode of one or more of the groups,
- environmental effects in one or more of the multiple sensing areas,
- currently available bandwidth in one or more of the multiple sensing areas,
- current capabilities of one or more of the nodes,
- current group properties of one or more of the groups,
- a number of users in the multiple sensing areas of the RF system experiencing the consistent latency, and
- a false event detection rate requirement.

The sensing applications may include, for example, motion detection, occupancy detection, breathing detection, breathing rate recognition, fall detection, heart rate recognition, or any other sensing application.

The latency requirement may include, for example, a certain time duration within which the processing of the data needs to be completed and the sensing event needs to be either detected or not, e.g., for life-safety-critical sensing applications which require a fast reaction. Another latency requirement may for example be a lighting control latency requirement according to which lighting needs to be activated within a certain time duration in response to a user entering the sensing area.

The expected event in the sensing area may be any sensing event detected by performing RF-based sensing for a certain sensing application, such as occupancy detection, fall detection, breathing rate recognition, heart rate recognition, gesture recognition, or the like.

The size of the one or more of the sensing areas may depend on its height, width, and length. The size and shape of the one or more of the sensing areas may depend on locations of the nodes that define the one or more sensing areas.

The radio power consumption requirement may include, for example, a standby-power regulatory requirement. A standby-mode may include, for example, not performing a primary function of the node. The node may be configured, for example, to perform RF-based sensing in the standby mode, i.e., when it is not performing its primary function. For example, the node may be a luminaire, which does not provide light in standby-mode, but performs RF-based sensing. In this case, standby power consumed by the node corresponds to power being consumed by the node while processing RF messages for performing RF-based sensing, e.g., including receiving the RF messages, and processing them, e.g., using a sensing analysis algorithm. Power consumption for performing RF-based sensing depends on the setting of the configuration parameters, such that energy consumption may be adjusted in dependence of the configuration parameters such that the radio power consumption requirements may be fulfilled.

The radio transmit power requirement may include, for example, a limitation of transmit power, e.g., due to wireless interference caused by high transmit power. For example, in a hospital room, medical machines may be disturbed by the wireless interference, such that an allowable transmit power for performing RF-based sensing may be limited based on the radio transmit power requirement.

The radio beam shape requirement and the radio receive beamforming requirement relate to how beams are required to be shaped which are used for performing RF-based sensing. Beams may be, for example, narrow beams or divergent beams. The beam shape may influence the sensing area that may be covered by performing RF-based sensing. Narrow beams may, for example, allow to cover a longer sensing area, while divergent beams may, for example, allow to cover a wider sensing area. Using a narrow beam may allow to perform RF-based sensing between two nodes which are farther away from each other compared to using a divergent beam. Furthermore, using a narrow beam allows focusing the RF signal into a specific direction, such that beamforming in this manner may allow to provide higher signal quality to the receiving node.

The current location of the at least one of the nodes may include, for example, a relative location of the at least one of the nodes to another nodes. This may influence a length of the transmission between the nodes. The current location of the at least one of the nodes may be, for example, in proximity of a tangible entity.

The current location of a tangible entity, e.g., a user, in the multiple sensing areas may include, for example, a relative location of the tangible entity in or with respect to the sensing area and/or the nodes. The current location of the tangible entity may also include, for example, the tangible entity being within a specific sensing area or at a specific location within a specific sensing area. For example, the sensing areas may have different heights. A sensing area may be located, for example, in a warehouse with nodes in form of luminaires arranged at workstations close to the floor of the warehouse. In this case, for example, RF-based sensing for detecting motion close to the floor may be performed by the nodes with good detection performance while detecting motion, e.g., of a robot crane, close to the ceiling may be performed with worse detection performance or not at all. For example, it may be intended to only detect motion on the floor while motion at the ceiling, e.g., of the robot cranes is not of interest.

Depending on the characteristics of the tangible entity, e.g., a specific user, for example, consistent latency, latency range, or both, may be lower or higher than for another user.

The current date may be, for example, daytime or nighttime, or day of the week, such as a working day or weekend. The RF system may be configured for determining the current date based on a clock and/or calendar. For example, during daytime consistent latency, latency range, or both, may be lower than during nighttime. Alternatively, for example, during daytime consistent latency may be larger and latency range may be larger during nighttime. For example, if a user gets out of bed during nighttime and it is dark, anti-stumble lighting may be provided with a short latency in order to avoid stumbling. During daytime anti-stumble lighting may not be required.

A current operation mode of a respective node may include, for example, performing a primary function, such as providing lighting, performing RF-based sensing, and/or operating in standby-mode.

Environmental effects may include, for example, wireless interference, e.g., provided by an interference source, such as a microwave oven. The wireless interference may deteriorate the signal-to-noise ratio (SNR) for the RF-based sensing and increase a number of missed RF messages between the nodes, i.e., reducing a sampling rate or effective messaging rate, respectively.

Currently available bandwidth of all multiple sensing areas corresponds to a currently available bandwidth in the RF system. Taking into account the currently available bandwidth in the RF system may allow to compensate a certain degree of lack of sampling rate, e.g., due to missing RF messages. For example, the configuration parameters of the RF system may be adapted in order to avoid or at least reduce wireless congestion of the network used by the RF system for exchanging data.

The false event detection rate requirement corresponds to a tolerance for false detections. The false event detection rate requirement may include, for example, a false positive rate versus a false negative rate.

The RF system may be configured for performing RF-based sensing and reacting to the event detected by the RF-based sensing such that the latency range, the consistent latency, or both stay below a respective threshold value over time. This allows to provide a reliable reaction of the RF system and consistent user experience over time. A reliable reaction of the RF system may allow an improved interaction of different external devices with the RF system and nodes within the RF system since reaction of the RF system can be more easily estimated. For example, if an external device is used in different sensing areas, the duration between detecting an event and the reaction to the event is limited to the consistent latency and the latency range. The external device may therefore, for example, be adapted in its operation such that it only needs to provide free processing power for this estimated time frame in which the reaction of the RF system is expected. In order to provide a reliable reaction of the RF system and consistent user experience over time, for example, frequent updates of the consistent latency and/or the latency range may be avoided.

The two or more groups may have different group properties including one or more of:
- a different number of nodes,
- different capabilities of one or more nodes,
- different current free processing power, and
- different current load. Considering various different group properties allows more flexibility in adapting the groups in order to perform RF-based sensing and to react to the event detected by the RF-based sensing with the consistent latency or at least with a latency within a latency range around the consistent latency.

A higher number of nodes may influence the latency, e.g., as a higher number of nodes may increase wireless communication traffic and thus wireless congestion resulting in a lower sampling rate which may increase latency. On the other hand, a higher number of nodes may improve coverage of the sensing area allowing to detect the event, e.g., a user entering the sensing area, faster, thus lowering latency.

Different capabilities of the one or more nodes may include, for example, transmitting capabilities, receiving capabilities, and processing capabilities, such as computational power. The capabilities of the nodes determine capabilities of the groups for performing RF-based sensing and reacting to the event detected by the RF-based sensing and thus the corresponding latencies of the groups.

The different current free processing power and different current loads may also influence latency, as processing of information regarding an event may not be performed immediately when receiving them due to lack of current free processing power or high current load.

The latency range may be, for example, between 0 s and 0.2 s. This may allow ensuring that a human user does not experience a delay between different sensing areas for the detection of an event and the reaction to the event, e.g., entering the sensing area and activation of lighting. The latency range may be, for example, 0.2 s, 0.1 s, 0.05 s, 0 s, or any other value in between 0 s and 0.2 s. The latency range may also be, for example, between 0 s and 0.1 s, such as between 0 s and 0.05 s.

The RF system may be configured for adapting at least one of the two or more of the groups such that they perform RF-based sensing and react to the event detected by the RF-based sensing with the consistent latency or at least with a latency within the latency range around the consistent latency based on adjusting an RF-based sensing activity of at least one of the groups, adjusting a reaction activity of at least one of the groups, or both.

Adjusting the RF-based sensing activity may include, for example, adjusting the configuration parameters of the RF system including, for example, adding or removing one or more of the nodes of one or more of the groups to one or more other groups for reducing the latency of another group for performing RF-based sensing, or a combination thereof. This may allow to reduce energy consumption, decrease wireless congestion of other groups, decrease latency of other groups, or a combination thereof. By decreasing latency of another group, the consistent latency, the latency range, or both may be decreased.

Adjusting the reaction activity may include, for example, adjusting the configuration parameters of the RF system, including for example, adding a delay for reacting to the event detected by performing RF-based sensing in order to increase the latency of a group with a latency below the consistent latency up to the consistent latency, or at least up to a latency corresponding to the consistent latency minus the latency range. This may allow to provide a more reliable reaction of the RF system and more consistent user experience across the different groups and sensing areas of the RF system. The delay may be added, for example, by delaying a provision of a finding obtained by performing RF-based sensing or by delaying an action in reaction to the finding. The finding may be, for example, detecting a certain event.

The RF system may be configured for providing a latency criticality ranking of one or more events which are to be detected by the two or more groups by performing RF-based sensing. Additionally, the RF system may be configured for determining the consistent latency, the latency range, or both based on the latency criticality ranking. The latency criticality ranking of the one or more events may further be based on corresponding actions to be performed in reaction to detecting the event by performing RF-based sensing. For example, activating lighting at nighttime based on motion detection in order to prevent stumbling may be more latency critical than automatically deactivating lighting based on vacancy detection when a person leaves a room. The RF system may be configured for prioritizing sensing applications according to their latency criticality ranking. This may allow to optimize RF-based sensing in dependence of a respective sensing application that is to be performed with priority since a latency criticality of the respective sensing application is higher than for another sensing application.

Different sensing applications may have different latency and/or different latency requirements. The RF system and/or one or more groups of the RF system may be configured for performing RF-based sensing for detecting different events in parallel, i.e., the RF system and/or the one or more groups may perform different sensing applications in parallel, e.g., occupancy detection and fall detection. One of the sensing applications may be prioritized, e.g., different weights may be assigned to the different sensing applications.

The RF system may be configured for performing RF-based sensing and reacting to a respective event detected by the RF-based sensing with a respective consistent latency or at least with a latency within a respective latency range around the respective consistent latency. In other words, depending on the sensing application, different consistent latencies and latency ranges may be determined. For example, a consistent latency for detecting a motion event and reacting to it may be lower than a consistent latency for recognizing a breathing rate event and reacting to it. This allows performing RF-based sensing and reacting to different events detected by the RF-based sensing with different consistent latencies or at least with latencies within different latency ranges around the consistent latencies for which the different consistent latencies and/or the different latency ranges depend on the sensing application or the detected sensing events, respectively.

The RF system may be configured for determining the consistent latency, the latency range, or both based on a respective latency requirement for at least the two of the groups. The latency requirement may be dependent on which sensing application the respective group performs.

In a further aspect of the present invention a method for performing RF-based sensing and reacting to an event detected by the RF-based sensing with a consistent latency or at least with a latency within a latency range around the consistent latency in an RF system comprising multiple nodes grouped in multiple groups, each of the groups configured for performing RF-based sensing in a respective sensing area of multiple sensing areas of the RF system is presented. The method comprises the steps:
- determining a latency of two or more of the groups for performing RF-based sensing and reacting to the event detected by the RF-based sensing,
- determining the consistent latency based on the determined latencies, and
- adapting at least one of the two or more of the groups such that they perform RF-based sensing and react to the event detected by the RF-based sensing with the consistent latency or at least with a latency within a latency range around the consistent latency.

The method may comprise one or more of the steps:
- optimizing the latency of one or more groups with a latency equal to or above the consistent latency in order to minimize the latency range, the consistent latency, or both,
- increasing a messaging rate for optimizing the latency of the one or more groups with latency equal to or above the consistent latency,
- increasing transmit power for optimizing the latency of the one or more groups with latency equal to or above the consistent latency,
- removing one or more nodes of the one or more groups with latency equal to or above the consistent latency for optimizing the latency of the one or more groups with latency equal to or above the consistent latency,
- adding one or more nodes, e.g., of one or more other groups, to the one or more groups with latency equal to or above the consistent latency for optimizing the latency of the one or more groups with latency equal to or above the consistent latency,
- reducing an RF-based sensing activity of one or more groups adjacent to the one or more groups with latency equal to or above the consistent latency for optimizing the latency of the one or more groups with latency equal to or above the consistent latency,
- rebalancing wireless communication traffic in order to reduce wireless interference caused by the wireless communication traffic for optimizing the latency of the one or more groups with latency equal to or above the consistent latency,
- determining a minimal latency of a group with a highest latency of the determined latencies of the two or more of the groups for performing RF-based sensing and reacting to the event detected by the RF-based sensing,
- determining the consistent latency, the latency range, or both based on the minimal latency,
- determining the consistent latency, the latency range, or both based on a current context,
- performing RF-based sensing and reacting to the event detected by the RF-based sensing such that the latency range, the consistent latency, or both stay below a respective threshold value over time,
- adapting at least one of the two or more of the groups such that they perform RF-based sensing and react to the event detected by the RF-based sensing with the consistent latency or at least with a latency within the latency range around the consistent latency based on adjusting an RF-based sensing activity of at least one of the groups, adjusting a reaction activity of at least one of the groups, or both,
- providing a latency criticality ranking of one or more events which are to be detected by the two or more groups by performing RF-based sensing, and
- determining the consistent latency, the latency range, or both based on the latency criticality ranking.

In a further aspect of the present invention a computer program product for performing RF-based sensing and reacting to an event detected by the RF-based sensing with a consistent latency or at least with a latency within a latency range around the consistent latency is presented. The computer program product comprises program code means for causing a processor to carry out the method according to claim 12, claim 13, or any embodiment of the method, when the computer program product is run on the processor.

In a further aspect a computer readable medium having stored the computer program product of claim 14 is presented. Alternatively or additionally the computer readable medium can have the computer program product according to any embodiment of the computer program product stored.

It shall be understood that the RF system of claim 1, the method of claim 12, the computer program product of claim 14, and the computer readable medium of claim 15 have similar and/or identical preferred embodiments, in particular, as defined in the dependent claims.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

In the following drawings:
Fig. 1 shows schematically and exemplarily a node for an RF system,
Fig. 2 shows schematically and exemplarily an embodiment of an RF system with four groups of nodes in a first configuration,
Fig. 3 shows schematically and exemplarily the embodiment of the RF system in a second configuration, and
Fig. 4 shows an embodiment of a method for performing RF-based sensing and reacting to an event detected by the RF-based sensing with a consistent latency or at least with a latency within a latency range around the consistent latency.

### DETAILED DESCRIPTION OF EMBODIMENTS

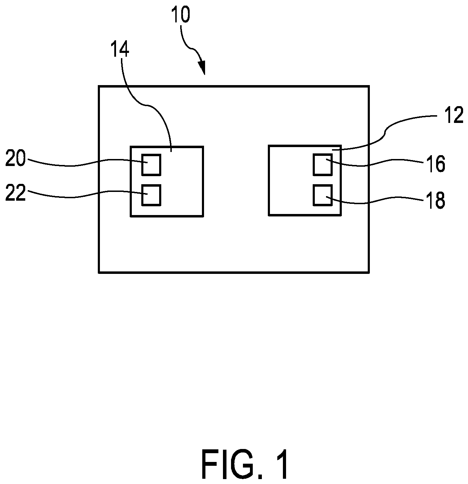

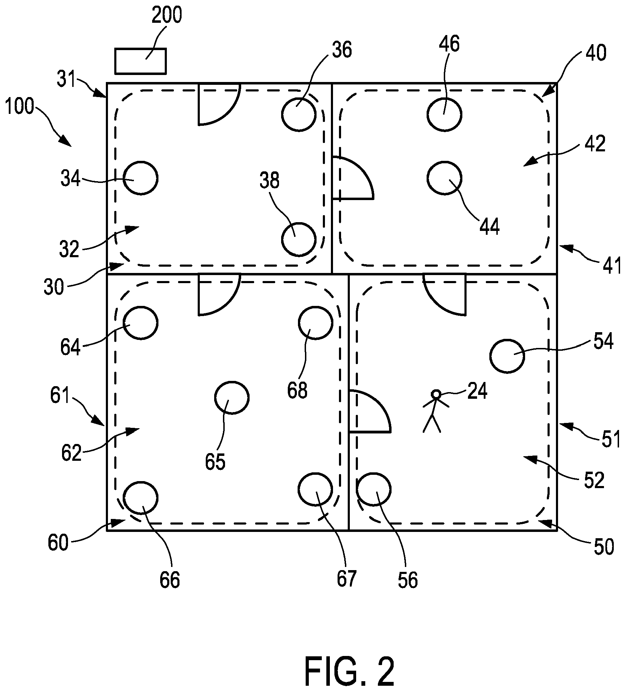

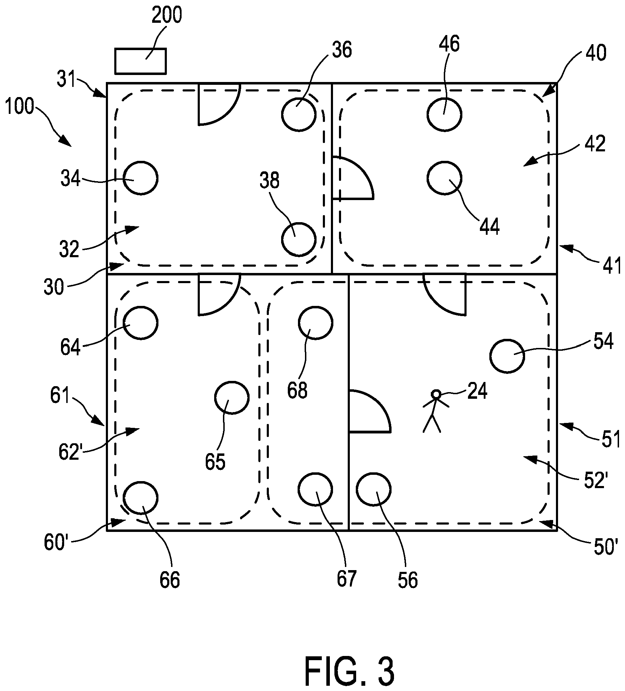

Fig. 1 shows schematically and exemplarily a node 10 for an RF system, e.g., connected lighting (CL) system 100 presented in two different configurations in Figs. 2 and 3. In the following we describe details for the exemplary node 10 that may be used in the CL system 100 before providing details about the functionality of the CL system 100.

The node 10 comprises a control unit 12 and a communication interface 14.

The control unit 12 includes a processor 16 and a computer readable medium in form of memory 18.

The communication interface 14 includes an antenna array 20 and a transceiver in form of a WiFi transceiver 22. Instead of an antenna array, a single antenna may also be included in the communication interface.

The WiFi transceiver 22 is used for transmitting and receiving RF signals including RF messages based on WiFi, i.e., WiFi RF messages. In other embodiments, the communication interface may also exchange data based on one or more other communication protocols, such as Thread, Zigbee, cellular radio, Bluetooth, BLE, or any other communication protocol. The communication interface may also include two or more transceivers configured for exchanging data based on different communication protocols.

The communication interface 14 uses the antenna array 20 for transmitting RF signals to nodes and receiving RF signals from nodes of the CL system 100, respectively, for exchanging data including RF messages wirelessly between the nodes and for performing RF-based sensing. The RF signals transmitted from one node to another node may be disturbed, e.g., by a tangible entity such as a user within a transmission path between the nodes. The RF signals disturbed by the user can be analysed in the control unit 12 for performing RF-based sensing.

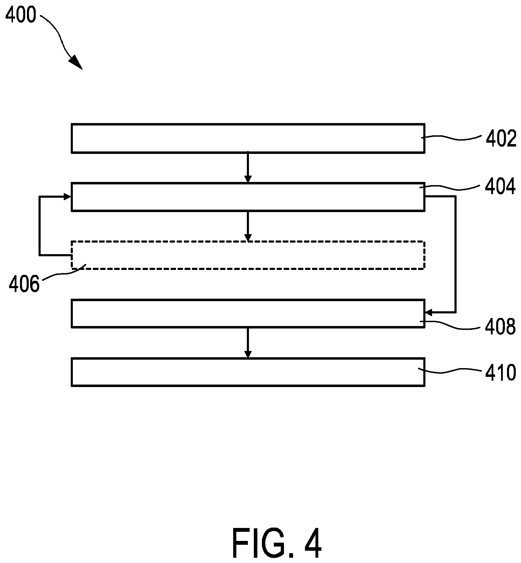

The memory 18 of the control unit 12 stores a computer program product for operating the CL system 100. The computer program product includes program code means for causing processor 16 to carry out a method for performing RF-based sensing and reacting to an event detected by the RF-based sensing with a consistent latency or at least with a latency within a latency range around the consistent latency, when the computer program product is run on the processor 16, e.g., the method for performing RF-based sensing and reacting to an event detected by the RF-based sensing with a consistent latency or at least with a latency within a latency range around the consistent latency in an RF system comprising multiple nodes grouped in multiple groups as presented in Fig. 4. The memory 18 further includes a computer program product for operating the node 10 and optionally also the whole CL system 100, respectively, e.g., for controlling the functions of the node and controlling the functions of the nodes of the CL system 100, for example, in order to perform an action in reaction to the event detected by the RF-based sensing, such as providing lighting as well as for performing RF-based sensing.

Fig. 2 shows an embodiment of an RF system in form of CL system 100 including a first group 30 of nodes 34, 36, and 38, a second group 40 of nodes 44 and 46, a third group 50 of nodes 54 and 56, and a fourth group 60 of nodes 64, 65, 66, 67, and 68. In this embodiment, the groups 30, 40, 50, and 60 have different group properties in that they have different numbers of nodes and different capabilities for some of the nodes. In particular, nodes 34, 44, 54, and 64 have higher processing capabilities than the remaining nodes. In other embodiments, other different group properties may include, for example, different current free processing power and/or different current load.

The CL system 100 is shown in a view from a top perspective in a first configuration arranged in a building with four rooms 31, 41, 51, and 61. The first group 30 performs RF-based sensing in a first sensing area 32 in room 31, the second group 40 performs RF-based sensing in a second sensing area 42 in room 41, the third group 50 performs RF-based sensing in a third sensing area 52 in room 51, and the fourth group 60 performs RF-based sensing in a fourth sensing area 62 in room 61. In other embodiments, the RF system may have a different number of nodes, e.g., two, three, four, or more and/or a different number of groups. The sensing areas may be of different size, shape and location in the other embodiments. Also in different embodiments, the RF system may be arranged in a different building or in an open space.

Node 34 is a WiFi router and the other nodes 36, 38, 44, 46, 54, 56, 64, 65, 66, 67, and 68 are luminaires for providing light as well as for performing RF-based sensing. In other embodiments, the nodes may also be of another type and perform another function, such as switches, lights, bridges, or the like. The node 34 is wirelessly connected to an external server 200. The external server 200 can be used for controlling the nodes 36 to 68 of the CL system 100, e.g., by transmitting control signals to one or more of them. The external server may be, for example, a server of a building management system (BMS). In this embodiment, the external server 200 only exchanges data directly with node 34. Node 34 then may exchange data with the other nodes 36 to 68 for controlling their functions. Node 34 may also transmit control signals to another node, e.g., node 36 which may forward it to further nodes, such as to nodes 44 and 46.

In this embodiment, locations of the nodes 34, 36, and 38 of the first group 30 define the first sensing area 32, locations of the nodes 44 and 46 of the second group 40 defines the second sensing area 42, locations of the nodes 54 and 56 of the third group 50 define the third sensing area 52, and locations of the nodes 64, 65, 66, 67, and 68 of the fourth group 60 define the fourth sensing area 62. In other embodiments or configurations of the CL system 100, sensing areas may be different. The sensing areas may also, for example, be predefined, e.g., adapted to the rooms of a building.

RF-based sensing, e.g., passive RF-based sensing in which a node transmits an RF signal including RF messages and one or more other nodes receive the RF messages and analyze them, depends on the amount, capabilities, and locations of the nodes used for performing RF-based sensing. The amount of nodes in each room may differ. For example, room 31 includes 3 nodes, rooms 41 and 51 each include 2 nodes, and room 61 includes 5 nodes. Furthermore, the capabilities, such as transmitting, receiving, and processing capabilities, of the different nodes may differ, e.g., between a new high-end node and a commodity or legacy node. Additionally, the rooms 31, 41, 51, and 61 may experience different levels of wireless congestion, e.g., rooms with nearby sources of wireless interference or noise sources may experience a higher wireless congestion. The wireless congestion may cause missing RF messages. This may reduce the detection performance and increase latency, e.g., as insufficient information is received for detecting an event with sufficient confidence and the nodes may need to process more RF messages than normal before being able to detect the event with confidence. This may lead to less free computational power for other functions of the nodes or less free computational power for performing RF-based sensing in case that other functions are performed by the nodes. In summary, different groups of nodes operating in the different sensing areas may have significantly different latencies for detecting events by RF-based sensing, i.e., they may have different RF-based sensing latency, and may also have different latency for reacting to a detected event by performing an action, i.e., they may have different reaction latencies.

In the prior art latency is optimized at a single sensing area level or single room level, i.e., latency for detecting an event and reacting to it is independently optimized for each sensing area in a building without considering how optimizing the latency in one sensing area influences the latencies in other sensing areas. Prior art techniques for detecting events, such as motion detection, e.g., based on passive infrared (PIR) sensors, vision-sensors, and microwave sensors typically do not have different latencies as they typically use similar hardware with similar latencies. For prior art techniques, for detecting events, a deviation between latencies is caused by a relative placement of the sensors with respect to a detection area. The latencies may therefore be made consistent based on optimizing orientation of the field of view (FOV) of the respective prior art sensor. The prior art is silent about how to optimize latencies of groups of nodes performing RF-based sensing such that a consistent latency or at least latencies within a latency range around the consistent latency are achieved in different sensing areas.

The CL system 100 is used for performing RF-based sensing and reacting to an event detected by the RF-based sensing with a consistent latency or at least with a latency within a latency range around the consistent latency. The CL system allows to perform, for example, a full-home-level optimization for performing passive RF-based sensing with consistent latency or at least with a latency within the latency range around the consistent latency across the different rooms of the RF system as well as over time and for different environmental conditions. The rooms may include different number of nodes, which may have different capabilities, and which may concurrently perform different sensing applications. The CL system 100 may allow a user to have a consistent user experience and may allow a more reliable interaction between the CL system 100 and external devices, such as external server 200, as the latency behavior of the CL system 100 may always and everywhere be the same or at least very similar, i.e., within the latency range.

In the following details of the functionality of the CL system 100 are provided.

In this embodiment, a sensing analysis algorithm for performing RF-based sensing is run on the nodes 34, 44, 54, and 64, while the other nodes 36, 38, 46, 56, 65, 66, 67, and 68 provide RF signals including RF messages for performing RF-based sensing. The nodes 34, 44, 54, and 64 are the respective nodes with the highest processing capabilities in their respective group 30, 40, 50, and 60.

In this embodiment, RF-based sensing is performed for detecting an event in form of occupancy of the sensing areas 32, 42, 52, and 62. In other embodiments, RF-based sensing may be performed for detecting another event, i.e., performing another sensing application, or for detecting several events concurrently, i.e., performing several different sensing applications concurrently. The RF system may operate with an identical consistent latency and/or latency range for all sensing applications or may operate with different consistent latencies and/or latency ranges for different sensing applications. The RF signals are exchanged between the respective nodes of the respective group for performing RF-based sensing.

A tangible entity in form of user 24 moves around in a transmission path in room 51. This disturbs the RF signals exchanged between nodes 54 and 56 of the third group 50. Eventually node 54 detects occupancy of the sensing area 52 with a current RF-based sensing latency. Node 54 reports the detection of the event, i.e., occupancy of the sensing area 52, to node 56 and both nodes 54 and 56 react to the event by activating lighting, i.e., turning on a light element of the luminaires 54 and 56. Reporting the detection of the event and activating the lighting takes some time, corresponding to a current reaction latency of group 50. The current RF-based sensing latency and the current reaction latency of group 50 together form the current latency of the group 50. The node 54 may furthermore report the detection of the event to the other groups 30, 40, and 60.

In the situation shown in Fig. 2, the nodes 34, 44, and 64 do not detect occupancy of their respective sensing areas 32, 42, and 62 as no tangible entity is present in their respective sensing areas 32, 42, and 62.

In this embodiment, in order to determine the consistent latency, the nodes 34, 44, 54, and 64 determine a minimal latency for performing RF-based sensing and reacting to the event detected by the RF-based sensing for their respective group 30, 40, 50, and 60 for the current context and an optimized configuration. Therefore, the groups 30, 40, 50, and 60 determine a current latency for the current context and their current configuration whenever an event is detected and iteratively adapt their configuration in order to find a minimal latency at an optimized configuration.

In other embodiments, the minimal latency may be determined based on assumptions, including, for example, that the minimal latency needs to be higher than a messaging rate times a number of samples or RF messages, respectively, needed per node, optionally further considering a number of nodes in the group. For example, recognizing a breathing rate event based on breathing recognition is not possible in less than a minute if 30 samples are needed by the sensing analysis algorithm for recognizing the breathing rate event with sufficient confidence and a sample corresponding to an RF message is transmitted once every 2 seconds, i.e., the minimal latency may not be smaller than one minute in this case. The minimal latency may be additionally determined based on statistics including, for example, statistics on potential wireless interference and missing RF messages based on transmit power, receiver sensitivity, or the like. This allows estimating an offset for the minimal latency, e.g., based on missing RF messages of some milliseconds to seconds, e.g., 5 ms, 20 ms, 50 ms, or 2 s, from the ideal case in which no RF messages are lost.

In other embodiments, for example, a current latency may be determined for each of the groups or a subset of the groups, e.g., two or more of the groups, without minimizing latency.

In order to determine a current latency of a group for the current context and the current configuration, a time series of RF messages is generated and analysed. A current RF-based sensing latency is determined based on the time series of RF messages as difference between a point in time in which an indication of an event is first observable in the time series and a point in time in which the event is detected with sufficient confidence. Additionally, a current reaction latency is determined by measuring the time between detecting the event and performing an action in reaction to the detection of the event. The current RF-based sensing latency and the current reaction latency are added in order to determine the current latency of the group.

In other embodiments, other methods for determining the current latency may be used, e.g., utilizing a light barrier. In yet other embodiments, a magnetic battery-operated door status sensor at an entrance to the sensing area, e.g., at an entrance door may be utilized. The entrance door may be operated automatically or manually causing, for example, a motion event due to automatically or manually opening the entrance door which may be detected by performing RF-based sensing. In other embodiments, an image sensor, such as a security cam, or a sound sensor, or any other audio-visual sensor may be utilized. The image sensor may detect, for example, an image of a tangible entity at a certain point in time and the sound sensor may detect, for example, sounds generated by the tangible entity at a certain point in time. The point in time may be used for identifying when the event occurred in order to determine the current RF-based sensing latency for detecting the event by RF-based sensing.

The configuration of the nodes of the group is then optimized by adapting one or more configuration parameters including, for example, messaging rate, transmit power, a number of nodes in the group, locations of the nodes in the group, locations of the sensing area, sizes of the sensing area, or any other configuration parameter affecting RF-based sensing and/or reacting to the event detected by the RF-based sensing. In this embodiment, only messaging rate and transmit power are adapted, i.e., the minimal latency is a function of messaging rate and transmit power. In other embodiments, other configuration parameters may be used for determining the minimal latency.

An updated current latency for the group is then determined. These steps may be iteratively repeated until a stop condition is fulfilled, e.g., a minimal latency is reached for which the change of latency in the iterative step is below a certain threshold level, or for a predetermined number of iterations.

In other embodiments, a minimal latency may be determined only of a group with a highest latency of the determined latencies, e.g., current latencies, of the two or more of the groups for performing RF-based sensing and reacting to the event detected by the RF-based sensing.

Once a minimal latency is determined for each of the groups, the minimal latencies are transmitted to the node 34 for determining a consistent latency. Node 34 determines the consistent latency based on the minimal latencies of the groups 30, 40, 50, and 60. In this embodiment, the consistent latency corresponds to the highest of the minimal latencies minus the latency range. In this embodiment, the latency range is 0.2 s. In other embodiments, the latency range may be, for example, between 0 and 0.2 s. The latency range may be predetermined or determined based on the determined latencies of the groups.

Since the minimal latencies are determined for the current context, the CL system 100 determines the consistent latency based on the current context. In other embodiments, the RF system may also determine the consistent latency, the latency range, or both based on a current context. The current context may include a sensing application of one or more groups, a latency requirement of one or more groups, an expected event in one or more of the multiple sensing areas, a size of one or more of the sensing areas, a shape of one or more of the sensing areas, a radio power consumption requirement, a radio transmit power requirement, a radio beam shape requirement, a radio receive beamforming requirement, a current location of the RF system, a current location of at least one of the nodes, a current location of a tangible entity in the multiple sensing areas, characteristics of a tangible entity in one of the sensing areas, a current date, a current operation mode of one or more of the groups, environmental effects in one or more of the multiple sensing areas, currently available bandwidth in one or more of the multiple sensing areas, current capabilities of one or more of the nodes, current group properties of one or more of the groups, a number of users in the multiple sensing areas of the RF system experiencing the consistent latency, and/or a false event detection rate requirement.

Since some of the groups may have a latency that is not within the latency range of the consistent latency, these groups need to be adapted. In this embodiment, groups 40 and 60 have lower latencies which are not within the latency range of the consistent latency.

Group 40 is adapted by adding a delay for activating lighting which increases the reaction latency and thus the latency of group 40, i.e., group 40 is adapted by adjusting its reaction activity. Furthermore, transmit power and messaging rate of group 40 are reduced, which increases RF-based sensing latency of group 40, i.e., group 40 is adapted by adjusting its RF-based sensing activity. Due to these adaptions group 40 performs RF-based sensing and reacts to the event detected by the RF-based sensing with a latency within the latency range around the consistent latency.

For adapting group 60, two of its nodes, namely nodes 67 and 68 are removed from group 60 resulting in adapted group 60' shown in Fig. 3. This results in group 60' performing RF-based sensing in sensing area 62' with a higher latency.

In other embodiments, at least one of the groups with a latency that is not within the latency range around the consistent latency may be adapted such that the groups perform RF-based sensing and react to the event detected by the RF-based sensing with the consistent latency or at least with a latency within the latency range around the consistent latency. Adaption may be based on adjusting an RF-based sensing activity of at least one of the groups, adjusting a reaction activity of at least one of the groups, or both. RF-based sensing activity may be adjusted, for example, by adjusting a messaging rate or transmit power. Reaction activity may be adjusted, for example, by adding a delay before performing an action in reaction to detecting the event.

The CL system 100 may now perform RF-based sensing and react to an event detected by the RF-based sensing with the consistent latency or at least with a latency within the latency range.

Optionally, the CL system 100 may further optimize the consistent latency and latency range, e.g., reducing the consistent latency and/or the latency range based on adapting the configuration of the group with the highest latency, i.e., group 50. In other embodiments, the latency of one or more groups with a latency equal to or above the consistent latency may be optimized in order to minimize the latency range, the consistent latency, or both. The latency of the one or more groups with latency equal to or above the consistent latency may be optimized, for example, based on one or more of: increasing a messaging rate, increasing transmit power, removing one or more nodes of the one or more groups with latency equal to or above the consistent latency, adding one or more nodes, e.g., of one or more other groups, to the one or more groups with latency equal to or above the consistent latency, reducing an RF-based sensing activity of one or more groups adjacent to the one or more groups with latency equal to or above the consistent latency, and rebalancing wireless communication traffic in order to reduce wireless interference caused by the wireless communication traffic.

Fig. 3 shows a second configuration of the embodiment of the CL system 100. In this configuration, the nodes 67 and 68 are added to group 50 resulting in adapted group 50'. Adapted group 50' performs RF-based sensing in adapted sensing area 52' with a lower latency than group 50.

The nodes 34, 44, 54, and 64 can determine a minimal latency for performing RF-based sensing and reacting to the event detected by the RF-based sensing for their respective group 30, 40, 50', and 60' for the current context and an optimized configuration. Based on the minimal latencies a consistent latency is determined for the second configuration of the CL system 100. The latency range is unchanged. The consistent latency of the second configuration is lower than the consistent latency of the first configuration of the CL system 100.

This allows determining a well balanced consistent latency for the whole building in which the CL system 100 is arranged.

The groups 30, 40, 50', and 60' may be adapted such that they perform RF-based sensing and react to the event detected by the RF-based sensing with a latency within a latency range around the consistent latency.

The groups 30, 40, 50, and 60 of the CL system 100 perform RF-based sensing and react to the event detected by the RF-based sensing such that the latency range and the consistent latency stay below a respective threshold value over time. In this embodiment, the threshold value of the latency range is 0.2 s. In other embodiments, the threshold value for the latency range may be, for example, between 0 s and 0.2 s.

In other embodiments, the RF system may be configured for providing a latency criticality ranking of one or more events which are to be detected by the two or more groups by performing RF-based sensing. The RF system may additionally be configured for determining the consistent latency, the latency range, or both based on the latency criticality ranking.

Further embodiments of the RF system are presented in the following without figures.

In a first further embodiment, groups of different numbers of nodes with different capabilities are arranged in different rooms of a house. The minimal latencies, i.e., the lowest achievable latencies, of all groups are determined for a specific set of sensing applications, e.g., occupancy detection paired with fall detection, for a worst current context defined by the current date. The worst current context corresponds to the context which causes a highest latency compared to other contexts. The specific set of sensing applications does not need to be performed by all groups. Some groups may, for example, perform only occupancy detection.

One of the groups has a highest latency, e.g., a group in a small home office in the attic that has just two commodity nodes in form of luminaires. The highest latency may be considerably longer than the lowest latency of a best performing group, e.g., a group in a living room with many high-end nodes in form of luminaires.

A consistent latency for the house is determined based on the minimal latency of the group that has the highest latency. Furthermore, a latency range is determined.

Subsequently, the consistent latency and latency range are communicated to the groups with lower latencies. Optionally, the groups with lower latencies are adapted to perform RF-based sensing and react to the event detected by the RF-based sensing with the consistent latency or with a latency within the latency range around the consistent latency. In other words, the other groups meet the consistent latency at a full home level but do not vastly outperform it at the expense of extra RF messages or additional nodes added to the sensing area or extra computation increasing a standby power or deteriorating other groups of the RF system. For instance, if the consistent latency is 0.7 s for the entire house, e.g., 0.3 s longer than a standard 0.4 s latency setting for RF-based sensing, the groups with lower latency may reduce their RF-based sensing activity and/or reaction activity. For instance, the groups with lower latencies may lower their messaging rates, e.g., if the consistent latency of 0.7 s at full-home level is not difficult to achieve compared to a room's intrinsic superb latency capabilities. For example, the RF system may conclude that the groups with lower latency may achieve a latency within the latency range around the consistent latency of 0.7 s by reducing messaging rates to 80 % of an original setting. For example, if the group originally sent messages every 200 ms, it may adapt its messaging rate, such that it sends RF messages at every 250 ms, e.g., leading to a frequency reduction to 80 % of the original setting or in other words a frequency reduction of 20 %. This frequency reduction allows reducing energy consumption and wireless congestion.

The groups with lower latencies may, alternatively or additionally, hold off with actuating the lighting in reaction to detecting the event to increase their latencies in order to be within the latency range around the consistent latency. This may be achieved in two different ways, namely, by either delaying transmission of the finding that an event was detected or by delaying an action in reaction to receiving an event trigger notification. In the latter, for example, the event trigger notification may include an additional delay duration as part of the notification. The RF messages including the event trigger notification may alternatively, or additionally, include current latencies of other groups in order to determine a delay to achieve a latency which is within a latency range around a consistent latency.

After detecting the event, the group may study a history of a time series of the RF messages to determine when a first indication of the event was visible in the recorded time series. Based on this information, the group may determine a current latency of the detection event. In other words, the current latency may be determined as duration between a first vague indication of an event and its final detection with confidence.

In a further second embodiment, a first group experiences adverse circumstances, e.g., wireless interference in the sensing area in which it performs RF-based sensing, such that RF messages are missed. In this case, the latency of the first group may be increased as it takes more time for receiving a sufficient number of RF messages in order to detect an event by performing RF-based sensing. The first group may increase its messaging rate, i.e., sending more RF messages even at the expense of other drawbacks such as a higher energy consumption and more wireless interference for adjacent groups. Alternatively, or additionally, additional nodes from adjacent groups may be added to the first group in order to temporarily compensate for the adverse circumstances. Yet alternatively, or additionally, the RF-based sensing activity of other adjacent groups may be decreased in order to temporarily compensate the adverse circumstances for the first group. This may allow the first group which temporarily has a higher latency to achieve a latency within the latency range of the consistent latency. This approach of dealing with intermittent adversities faced by a single group may be advantageous at a RF system level as it does not require the rest of the groups to be adapted to a higher latency just because of an intermittent event.

In a further third embodiment, the consistent latency is based on which sensing application is prioritized in the RF system. Sensing applications include, for example, motion detection, true occupancy detection, breathing detection, fall detection and heart-rate recognition. Different sensing applications have different latencies. In this embodiment, the RF system concurrently performs multiple sensing applications, e.g., occupancy and fall detection. The RF system determines respective current latencies for each of the groups for each of the sensing applications. Additionally, the RF system provides a latency criticality ranking which indicates how latency-critical each of the sensing applications is in the RF system.

The RF system may provide the following exemplary latency criticality ranking for different sensing applications: 1. gesture detection, 2. light control based on motion, 3. notifications based on motion, 4. notifications based on true presence, e.g., security, 5. critical health-related features, such as heart rate detection or fall detection, 6. passive health-related features such as breathing rate recognition during sleep monitoring, and 7. statistics, e.g., people counting or people identification. In other embodiments, other latency criticality rankings may be provided. The latency criticality ranking may be provided as a look-up table (LUT), e.g., with a weight associated to each of the sensing applications. The consistent latency may then be determined by a function depending on the latencies and weights of one or more of the sensing applications.

The RF system may determine whether a highest latency of the groups for a specific one or more of the sensing applications is outside of the latency range above the consistent latency. The RF system may adapt the group or groups in order to reduce the highest latency, for example, only if the highest latency is outside of the latency range above the consistent latency.

In the following different sensing application scenarios are presented.

In reaction to detecting motion, lighting may be activated. Consistency for motion detection across different sensing areas is desirable. If the RF system shall, however, perform true presence sensing for security notifications instead of motion detection, e.g., when the user is on holiday or sleeps at an upper floor of a house in which the RF system is arranged and wants to monitor a ground floor during the night, consistency is less important. The RF system may, for example, be switched between a motion detection mode and a security-monitoring mode by a user. The RF system may prioritize performing RF-based sensing in a security-monitoring mode that performs RF-based sensing such that false positives are minimized rather than optimizing consistency of latency. In this case, when the user returns to the house and opens a front door, a hallway lighting occupancy detection will show a longer than usual latency. Once a first motion detection has been performed at the front door, the RF system may switch its operation mode to motion detection in order to provide a reliable and consistent latency. Alternatively, other sources like geofencing may be used for switching modes, e.g., if the user is close to the house.

A certain consistency of latency across different sensing areas may also be desirable for security applications. For example, a user may test whether the security-monitoring mode correctly operates, before going on holiday. The user typically does this by walking among multiple sensing areas and checking the latency until an action is performed in reaction to the detected event, e.g., the user receiving a push notification on a user device, e.g., smart phone, reporting a possible security break in the sensing area. The consistency of the latency may influence the user's confidence to have a properly working security-monitoring RF system for all sensing areas.

A main application of breathing rate recognition may be monitoring a sleep pattern over several hours. Mismatches in timing of breathing rate events by a few seconds do not significantly worsen detection performance for breathing rate recognition. For example, breathing rate recognition performed by RF-based sensing requires several conditions to be met, namely, for example, the user needs to be static enough and the RF-based sensing needs to collect several seconds, e.g., 30 s, of data to generate a first accurate data point on the breathing rate. As a result, consistency of a breathing rate latency across multiple rooms may not be important.

Gesture detection may be another sensing application for which consistency may be relevant and valued by users. For example, an RF system in form of a 60 GHz WiFi CL system, i.e., a CL system utilizing 60 GHz WiFi for exchanging data, may be utilized for detecting gestures in front of a television (TV) to control a gaming device or to control luminaires. For gesture recognition, consistent latency across different rooms is important, as the same gesture should be recognized in different rooms within a similar time. The user will quickly get frustrated if the gesture detection latency is too long and/or inconsistent between the room, e.g., a lower latency gesture recognition performed by RF-based sensing using a gaming personal computer (PC) in a first sensing area compared to a higher latency gesture recognition performed by RF-based sensing using a TV in a second sensing area. The latencies in the first sensing area and the second sensing area may be different due to the different processing capabilities of the TV and the gaming PC, but the latency may be lower than for other sensing areas. In a case in which different sensing areas have different specific characteristics, the RF system may have a second consistent latency used only in sensing areas that match the specific characteristics. In this case, the two sensing areas both have a gaming setup capable of reacting fast to the gestures detected by the RF system.

In a further fourth embodiment, the consistent latency is dynamically adjusted based on sensing applications and a current context. The consistent latency and/or the latency range may be adjusted based on a current context, e.g., a lower latency may be required for a specific group for performing a specific sensing application at night than during daytime hours or in dependence on which user is currently present in the multiple sensing areas of the RF system. In this case the latency range may be increased in order to allow the group to perform RF-based sensing with a lower latency. For instance, if it is pitch dark, actuating anti-stumble lighting for an elderly person when leaving her bed should be performed with an as short as possible latency. On the other hand, when a user enters a bedroom from an already illuminated hallway, a consistent latency is more important than a minimization of latency. This allows adapting the consistent latency and/or the latency range to a current context.

In a further fifth embodiment, a minimal latency for a group with a highest latency of the groups of an RF system is determined. It is then assessed, how adapting configuration parameters of the RF system for achieving the minimal latency for the group which previously had the highest latency affects the other groups of the RF system, e.g., degrading their performance and/or latency, including, for example, their performance for other communication and/or computing tasks. The RF system furthermore assesses how the adapting the configuration parameters affects a false-positive rate for the groups. The RF system then determines a consistent latency and a latency range taking into account the minimal latency, as well as its affect on the other groups and the false-positive rate for the groups. The RF system determines the consistent latency such that it is well-balanced for the entire RF system and the sensing application, whereby the consistent latency is a conscious trade-off between the sensing application needs of different groups as well as an achieved degree of consistency across all groups of the RF system. The RF system may therefore fine tune the configurations for each group of the RF system, such that they do not vastly exceed the consistent latency of the RF system.

Fig. 4 shows an embodiment of the method 400 for performing RF-based sensing and reacting to an event detected by the RF-based sensing with a consistent latency or at least with a latency within a latency range around the consistent latency in an RF system, e.g., the CL system 100 disclosed in Fig. 2 and Fig. 3. The RF system comprises multiple nodes grouped in multiple groups, each of the groups configured for performing RF-based sensing in a respective sensing area of multiple sensing areas of the RF system.

In step 402, a current latency of two of the groups is determined for performing RF-based sensing and reacting to the event detected by the RF-based sensing, i.e., a current latency is determined for each of the two groups. In other embodiments, the current latencies of all of the groups may be determined. Instead of the current latency or current latencies also, for example, a minimal latency or minimal latencies of the groups may be determined. In other words, detection latency abilities for each of the groups may be determined taking into account, for example, an available number of nodes in the groups, the processing capabilities of the nodes and the groups, the wireless environment, and the sensing applications performed.

In this embodiment, an RF-based sensing latency and a reaction latency are determined for each of the two groups. The current latency corresponds to the sum of RF-based sensing latency and the reaction latency.

The RF-based sensing latency is determined as duration between occurring of an event and its detection. In this embodiment, the event is occupancy detection and a timer is started when a user crosses a light barrier to enter the respective sensing area. The RF-based sensing latency corresponds to the duration between crossing the light barrier and detecting the event by the corresponding group performing RF-based sensing in the respective sensing area.

Furthermore, in this embodiment, a reaction latency is determined as duration between detecting the event and performing an action in reaction to the detected event. Again, the timer is utilized for determining the reaction latency. In this embodiment, the reaction is activating lighting.

In other embodiments, alternative methods for determining the current latency may be used. Furthermore, the method may be used for detecting other events.
In step 404, the consistent latency is determined based on the determined latencies of the two groups. In this embodiment, the consistent latency corresponds the higher one of the latencies of the two groups minus a predetermined latency range of 0.2 s.

In other embodiments, the consistent latency may also correspond to the highest latency, the highest latency minus a latency range, an average latency of the current latencies, a function depending on the determined latencies, or the like. The consistent latency, the latency range, or both may also be determined based on a current context. In this case, the consistent latency and the latency range may change based on the current context. Alternatively, the consistent latency and/or the latency range may be independent of the current context. The consistent latency and/or the latency range may be determined for a specific context and may not change for another context.

Upon determining the consistent latency, step 406 or step 408 is performed. Step 406 is optional. In this embodiment, step 406 is performed once. In other embodiments, step 406 may be performed repeatedly, e.g., in order to find a minimal consistent latency.

In step 406 the latency of the group with current latency above the consistent latency is optimized in order to minimize the consistent latency. In other embodiments, the latency of one or more groups with a latency equal to or above the consistent latency may be optimized in order to minimize the consistent latency, the latency range, or the consistent latency and the latency range.

In order to optimize the latency of the group with current latency above the consistent latency its messaging rate and transmit power are increased. In other embodiments, alternatively, or additionally, one or more nodes of one or more groups with latency equal to or above the consistent latency may be removed for optimizing the latency of the one or more groups with latency equal to or above the consistent latency, one or more nodes, e.g., of one or more other groups, may be added to the one or more groups with latency equal to or above the consistent latency for optimizing the latency of the one or more groups with latency equal to or above the consistent latency, an RF-based sensing activity of one or more groups adjacent to the one or more groups with latency equal to or above the consistent latency may be reduced for optimizing the latency of the one or more groups with latency equal to or above the consistent latency, or wireless communication traffic may be rebalanced in order to reduce wireless interference caused by the wireless communication traffic for optimizing the latency of the one or more groups with latency equal to or above the consistent latency.

Upon optimizing the latency, step 404 is performed in order to determine an updated consistent latency. In this embodiment, step 406 is only performed once, such that step 408 is performed after step 404 has been performed for the second time.

Alternatively, steps 404 and 406 may be performed in opposite order. In this case, a minimal latency of the group with a highest latency of the determined latencies of the, e.g., two or more, groups for performing RF-based sensing and reacting to the event detected by the RF-based sensing may be determined. Hence, in this case the latency of the group with highest latency is reduced before determining the consistent latency. The consistent latency, the latency range, or both may be determined based on the minimal latency in this case.

In step 408, the group with the lower latency is adapted such that both groups perform RF-based sensing and react to the event detected by the RF-based sensing with a latency within the latency range around the consistent latency. In this embodiment, an RF-based sensing activity and a reaction activity of the group with the lower latency is adjusted. In other embodiments, also only the RF-based sensing activity or the reaction activity may be adjusted. In particular, the messaging rate is reduced in order to reduce the RF-based sensing activity which increases the RF-based sensing latency. Furthermore, a delay is added between detecting the event and performing an action in reaction in order to reduce the reaction activity which increases the reaction latency. Thus, the RF-based sensing latency and the reaction latency of the group with the lower latency are increased, resulting in an increased latency of that group. The latency is increased such that it is within the latency range of 0.2 s of the consistent latency.

In other embodiments, at least one of the two groups may be adapted such that the groups perform RF-based sensing and react to the event detected by the RF-based sensing with the consistent latency or at least with a latency within a latency range around the consistent latency.

In step 410, each of the groups of the RF system performs RF-based sensing and reacts to the event detected by the RF-based sensing with the consistent latency or at least with a latency within the latency range around the consistent latency.

RF-based sensing and reacting to the event detected by the RF-based sensing may be performed such that the latency range, the consistent latency, or both stay below a respective threshold value over time. The consistent latency and the latency range may be constant over time, for example.

In other embodiments, two or more consistent latencies and/or two or more latency ranges may be provided, e.g., for groups which have same specific characteristics. For example, a set of groups may have a normal setup with higher latency and another set of groups may have a gaming setup with lower latency.

In other embodiments, a latency criticality ranking of one or more events which are to be detected by the two or more groups by performing RF-based sensing is provided. In this case, the consistent latency, the latency range, or both may be determined based on the latency criticality ranking.

While the invention has been illustrated and described in detail in the drawings and foregoing description, such illustration and description are to be considered illustrative or exemplary and not restrictive; the invention is not limited to the disclosed embodiments. For example, it is possible to operate the invention in an embodiment wherein the RF system is included in a BMS, a heating ventilating air conditioning (HVAC) system, a smart home system, an office system, an industry system, or a residential system. Industry applications may include, for example, performing RF-based sensing in a warehouse. The warehouse may include robot cranes for moving containers. RF-based sensing may be performed by nodes in form of luminaires integrated in workstations for detecting motion close to a floor but, e.g., not for detecting motion of the robot cranes higher up in the warehouse.

The invention may also be operated, for example, in hospitals for performing biometric tracking. Achieving a consistent latency may allow to compare behavior of people, such as whether they act with different speed.

The invention may alternatively, for example, be operated in parking garages or parking lots to ensure that lights do not turn on with different latency if more or less cars are parked. This may allow to provide a reliable and consistent latency.

Furthermore, the invention may be operated, for example, in smart garden lighting, e.g., if the garden is divided into subspaces by walls.

Other variations to the disclosed embodiments can be understood and effected by those skilled in the art in practicing the claimed invention, from a study of the drawings, the disclosure, and the appended claims.

In the claims, the word "comprising" and "including" does not exclude other elements or steps, and the indefinite article "a" or "an" does not exclude a plurality.

A single unit, processor, or device may fulfill the functions of several items recited in the claims. The mere fact that certain measures are recited in mutually different dependent claims does not indicate that a combination of these measures cannot be used to advantage.

Operations like determining a latency of two or more of the groups for performing RF-based sensing and reacting to the event detected by the RF-based sensing, determining the consistent latency based on the determined latencies, adapting at least one of the two or more of the groups such that they perform RF-based sensing and react to the event detected by the RF-based sensing with the consistent latency or at least with a latency within a latency range around the consistent latency, et cetera performed by one or several units or devices can be performed by any other number of units or devices. These operations and/or the method can be implemented as program code means of a computer program and/or as dedicated hardware.

A computer program product may be stored/distributed on a suitable medium, such as an optical storage medium, or a solid-state medium, supplied together with or as part of other hardware, but may also be distributed in other forms, such as via the Internet, Ethernet, or other wired or wireless telecommunication systems.

Any reference signs in the claims should not be construed as limiting the scope.

The present invention relates to performing RF-based sensing and reacting to an event detected by the RF-based sensing with a consistent latency or at least with a latency within a latency range around the consistent latency. A latency of two or more groups of nodes each for performing RF-based sensing and reacting to the event detected by the RF-based sensing in a respective sensing area of multiple sensing areas is determined. The consistent latency is determined based on the determined latencies. At least one of the two or more of the groups is adapted such that they perform RF-based sensing and react to the event detected by the RF-based sensing with the consistent latency or at least with a latency within a latency range around the consistent latency.

## Claims

1. A radio frequency system (100) for performing radio frequency based sensing and reacting to an event detected by the radio frequency based sensing with a consistent latency or at least with a latency within a latency range around the consistent latency, wherein the radio frequency system (100) comprises multiple nodes (34, 36, 38, 44, 46, 54, 56, 64, 65, 66, 67, 68) grouped in multiple groups (30, 40, 50, 60), each of the groups (30, 40, 50, 60) configured for performing radio frequency based sensing in a respective sensing area (32, 42, 52, 62) of multiple sensing areas (32, 42, 52, 62) of the radio frequency system (100), wherein the radio frequency system (100) is configured for:
- determining a latency of two or more of the groups (30, 40, 50, 60) for performing radio frequency based sensing and reacting to the event detected by the radio frequency based sensing,
- determining the consistent latency based on the determined latencies, and
- adapting at least one of the two or more of the groups (30, 40, 50, 60) such that they perform radio frequency based sensing and react to the event detected by the radio frequency based sensing with the consistent latency or at least with a latency within a latency range around the consistent latency.

2. The radio frequency system (100) according to claim 1, wherein the radio frequency system (100) is configured for optimizing the latency of one or more groups (50) with a latency equal to or above the consistent latency in order to minimize the latency range, the consistent latency, or both.

3. The radio frequency system (100) according to claim 2, wherein the radio frequency system (100) is configured for optimizing the latency of the one or more groups (50) with latency equal to or above the consistent latency based on one or more of:
- increasing a messaging rate,
- increasing transmit power,
- removing one or more nodes (54, 56) of the one or more groups (50) with latency equal to or above the consistent latency,
- adding one or more nodes (67, 68) to the one or more groups (50) with latency equal to or above the consistent latency,
- reducing a radio frequency based sensing activity of one or more groups (40, 60) adjacent to the one or more groups (50) with latency equal to or above the consistent latency, and
- rebalancing wireless communication traffic in order to reduce wireless interference caused by the wireless communication traffic.

4. The radio frequency system (100) according to at least one of the claims 1 to 3, wherein the radio frequency system (100) is configured for:
- determining a minimal latency of a group (50) with a highest latency of the determined latencies of the two or more of the groups (30, 40, 50, 60) for performing radio frequency based sensing and reacting to the event detected by the radio frequency based sensing, and
- determining the consistent latency, the latency range, or both based on the minimal latency.

5. The radio frequency system (100) according to at least one of the claims 1 to 4, wherein the radio frequency system (100) is configured for determining the consistent latency, the latency range, or both based on a current context.

6. The radio frequency system (100) according to claim 5, wherein the current context includes one or more of:
- a sensing application of one or more groups (30, 40, 50, 60),
- a latency requirement of one or more groups (30, 40, 50, 60),
- an expected event in one or more of the multiple sensing areas (32, 42, 52, 62),
- a size of one or more of the sensing areas (32, 42, 52, 62),
- a shape of one or more of the sensing areas (32, 42, 52, 62),
- a radio power consumption requirement,
- a radio transmit power requirement,
- a radio beam shape requirement,
- a radio receive beamforming requirement,
- a current location of the radio frequency system (100),
- a current location of at least one of the nodes (34, ..., 68),
- a current location of a tangible entity (24) in the multiple sensing areas (32, 42, 52, 62),
- characteristics of a tangible entity (24) in one of the sensing areas (32, 42, 52, 62),
- a current date,
- a current operation mode of one or more of the groups (30, 40, 50, 60),
- environmental effects in one or more of the multiple sensing areas (32, 42, 52, 62),
- currently available bandwidth in one or more of the multiple sensing areas (32, 42, 52, 62),
- current capabilities of one or more of the nodes (34, ..., 68),
- current group properties of one or more of the groups (30, 40, 50, 60),
- a number of users (24) in the multiple sensing areas (32, 42, 52, 62) of the radio frequency system (100) experiencing the consistent latency, and
- a false event detection rate requirement.

7. The radio frequency system (100) according to at least one of the claims 1 to 6, wherein the radio frequency system (100) is configured for performing radio frequency based sensing and reacting to the event detected by the radio frequency based sensing such that the latency range, the consistent latency, or both stay below a respective threshold value over time.

8. The radio frequency system (100) according to at least one of the claims 1 to 7, wherein the two or more groups (30, 40, 50, 60) have different group properties including one or more of:
- a different number of nodes (34, ..., 68),
- different capabilities of one or more nodes (34, ..., 68),
- different current free processing power, and
- different current load.

9. The radio frequency system (100) according to at least one of the claims 1 to 8, wherein the latency range is between 0 s and 0.2 s.

10. The radio frequency system (100) according to at least one of the claims 1 to 9, wherein the radio frequency system (100) is configured for adapting at least one of the two or more of the groups (40, 50, 60) such that they perform radio frequency based sensing and react to the event detected by the radio frequency based sensing with the consistent latency or at least with a latency within the latency range around the consistent latency based on adjusting a radio frequency based sensing activity of at least one of the groups (40, 50, 60), adjusting a reaction activity of at least one of the groups (40), or both.

11. The radio frequency system (100) according to at least one of the claims 1 to 10, wherein the radio frequency system (100) is configured for
- providing a latency criticality ranking of one or more events which are to be detected by the two or more groups (30, 40, 50, 60) by performing radio frequency based sensing, and
- determining the consistent latency, the latency range, or both based on the latency criticality ranking.

12. A method for performing radio frequency based sensing and reacting to an event detected by the radio frequency based sensing with a consistent latency or at least with a latency within a latency range around the consistent latency in a radio frequency system comprising multiple nodes grouped in multiple groups, each of the groups configured for performing radio frequency based sensing in a respective sensing area of multiple sensing areas of the radio frequency system, the method being performed by the radio frequency system and comprising the steps:
- determining a latency of two or more of the groups for performing radio frequency based sensing and reacting to the event detected by the radio frequency based sensing,
- determining the consistent latency based on the determined latencies, and
- adapting at least one of the two or more of the groups such that they perform radio frequency based sensing and react to the event detected by the radio frequency based sensing with the consistent latency or at least with a latency within a latency range around the consistent latency.

13. The method according to claim 12 comprising one or more of the steps:
- optimizing the latency of one or more groups with a latency equal to or above the consistent latency in order to minimize the latency range, the consistent latency, or both,
- increasing a messaging rate for optimizing the latency of the one or more groups with latency equal to or above the consistent latency,
- increasing transmit power for optimizing the latency of the one or more groups with latency equal to or above the consistent latency,
- removing one or more nodes of the one or more groups with latency equal to or above the consistent latency for optimizing the latency of the one or more groups with latency equal to or above the consistent latency,
- adding one or more nodes to the one or more groups with latency equal to or above the consistent latency for optimizing the latency of the one or more groups with latency equal to or above the consistent latency,
- reducing a radio frequency based sensing activity of one or more groups adjacent to the one or more groups with latency equal to or above the consistent latency for optimizing the latency of the one or more groups with latency equal to or above the consistent latency,
- rebalancing wireless communication traffic in order to reduce wireless interference caused by the wireless communication traffic for optimizing the latency of the one or more groups with latency equal to or above the consistent latency,
- determining a minimal latency of a group with a highest latency of the determined latencies of the two or more of the groups for performing radio frequency based sensing and reacting to the event detected by the radio frequency based sensing,
- determining the consistent latency, the latency range, or both based on the minimal latency,
- determining the consistent latency, the latency range, or both based on a current context,
- performing radio frequency based sensing and reacting to the event detected by the radio frequency based sensing such that the latency range, the consistent latency, or both stay below a respective threshold value over time,
- adapting at least one of the two or more of the groups such that they perform radio frequency based sensing and react to the event detected by the radio frequency based sensing with the consistent latency or at least with a latency within the latency range around the consistent latency based on adjusting a radio frequency based sensing activity of at least one of the groups, adjusting a reaction activity of at least one of the groups, or both,
- providing a latency criticality ranking of one or more events which are to be detected by the two or more groups by performing radio frequency based sensing, and
- determining the consistent latency, the latency range, or both based on the latency criticality ranking.

14. A computer program product for performing radio frequency based sensing and reacting to an event detected by the radio frequency based sensing with a consistent latency or at least with a latency within a latency range around the consistent latency, wherein the computer program product comprises program code means for causing a processor (16) to carry out the method according to claim 12 or 13, when the computer program product is run on the processor (16).

15. A computer readable medium (18) having stored the computer program product of claim 14.

## Patentansprüche

1. Funkfrequenzsystem (100) zum Durchführen einer funkfrequenzbasierten Erfassung und Reagieren auf ein durch die funkfrequenzbasierte Erfassung erkanntes Ereignis mit einer gleichbleibenden Latenz oder mindestens mit einer Latenz innerhalb eines Latenzbereichs um die gleichbleibende Latenz, wobei das Funkfrequenzsystem (100) mehrfache Knoten (34, 36, 38, 44, 46, 54, 56, 64, 65, 66, 67, 68) umfasst, die in mehrfachen Gruppen (30, 40, 50, 60) gruppiert sind, wobei jede der Gruppen (30, 40, 50, 60) zum Durchführen der funkfrequenzbasierten Erfassung in einem jeweiligen Erfassungsbereich (32, 42, 52, 62) von mehrfachen Erfassungsbereichen (32, 42, 52, 62) des Funkfrequenzsystems (100) konfiguriert ist, wobei das Funkfrequenzsystem (100) konfiguriert ist zum:
- Bestimmen einer Latenz von zwei oder mehr der Gruppen (30, 40, 50, 60) zum Durchführen der funkfrequenzbasierten Erfassung und Reagieren auf das durch die funkfrequenzbasierte Erfassung erkannte Ereignis,
- Bestimmen der gleichbleibenden Latenz basierend auf den bestimmten Latenzen, und
- Anpassen von mindestens einer der zwei oder mehr der Gruppen (30, 40, 50, 60) derart, dass sie die funkfrequenzbasierte Erfassung durchführen und auf das durch die funkfrequenzbasierte Erfassung erkannte Ereignis mit der gleichbleibenden Latenz oder mindestens mit einer Latenz innerhalb eines Latenzbereichs um die gleichbleibende Latenz reagieren.

2. Funkfrequenzsystem (100) nach Anspruch 1, wobei das Funkfrequenzsystem (100) zum Optimieren der Latenz einer oder mehrerer Gruppen (50) mit einer Latenz gleich oder über der gleichbleibenden Latenz konfiguriert ist, um den Latenzbereich, die gleichbleibende Latenz oder beide zu minimieren.

3. Funkfrequenzsystem (100) nach Anspruch 2, wobei das Funkfrequenzsystem (100) zum Optimieren der Latenz der einen oder der mehreren Gruppen (50) mit einer Latenz gleich oder über der gleichbleibenden Latenz konfiguriert ist, basierend auf einem oder mehreren von:
- Erhöhen einer Nachrichtenrate,
- Erhöhen einer Sendeleistung,
- Entfernen eines oder mehrerer Knoten (54, 56) der einen oder der mehreren Gruppen (50) mit einer Latenz gleich oder über der gleichbleibenden Latenz,
- Hinzufügen eines oder mehrerer Knoten (67, 68) zu der einen oder den mehreren Gruppen (50) mit einer Latenz gleich oder über der gleichbleibenden Latenz,
- Verringern einer funkfrequenzbasierten Erfassungsaktivität einer oder mehrerer Gruppen (40, 60), angrenzend an die eine oder die mehreren Gruppen (50) mit einer Latenz gleich oder über der gleichbleibenden Latenz, und
- Wiederausgleichen von drahtlosem Kommunikationsverkehr, um eine durch den drahtlosen Kommunikationsverkehr verursachte drahtlose Störung zu verringern.

4. Funkfrequenzsystem (100) nach mindestens einem der Ansprüche 1 bis 3, wobei das Funkfrequenzsystem (100) konfiguriert ist zum:
- Bestimmen einer minimalen Latenz einer Gruppe (50) mit einer höchsten Latenz der bestimmten Latenzen der zwei oder mehr der Gruppen (30, 40, 50, 60) zum Durchführen der funkfrequenzbasierten Erfassung und Reagieren auf das durch die funkfrequenzbasierte Erfassung erkannte Ereignis, und
- Bestimmen der gleichbleibenden Latenz, des Latenzbereichs oder von beiden basierend auf der minimalen Latenz.

5. Funkfrequenzsystem (100) nach mindestens einem der Ansprüche 1 bis 4, wobei das Funkfrequenzsystem (100) zum Bestimmen der gleichbleibenden Latenz, des Latenzbereichs oder von beiden basierend auf einem aktuellen Kontext konfiguriert ist.

6. Funkfrequenzsystem (100) nach Anspruch 5, wobei der aktuelle Kontext eines oder mehrere einschließt von:
- einer Erfassungsanwendung einer oder mehrerer Gruppen (30, 40, 50, 60),
- einer Latenzanforderung einer oder mehrerer Gruppen (30, 40, 50, 60),
- einem erwarteten Ereignis in einem oder mehreren der mehrfachen Erfassungsbereiche (32, 42, 52, 62),
- einer Größe eines oder mehrerer der Erfassungsbereiche (32, 42, 52, 62),
- einer Form eines oder mehrerer der Erfassungsbereiche (32, 42, 52, 62),
- einer Anforderung an einen Funkleistungsverbrauch,
- einer Anforderung an eine Funksendeleistung,
- einer Anforderung an eine Funkstrahlform,
- einer Anforderung an eine Funkempfangsstrahlformung,
- einer aktuellen Position des Funkfrequenzsystems (100),
- einer aktuellen Position mindestens eines der Knoten (34, ..., 68),
- einer aktuellen Position eines greifbaren Objekts (24) in den mehrfachen Erfassungsbereichen (32, 42, 52, 62),
- Eigenschaften eines greifbaren Objekts (24) in einem der Erfassungsbereiche (32, 42, 52, 62),
- eines aktuellen Datums,
- eines aktuellen Betriebsmodus einer oder mehrerer der Gruppen (30, 40, 50, 60),
- Umwelteinflüssen in einem oder mehreren der mehrfachen Erfassungsbereiche (32, 42, 52, 62),
- aktuell verfügbarer Bandbreite in einem oder mehreren der mehrfachen Erfassungsbereiche (32, 42, 52, 62),
- aktuellen Fähigkeiten eines oder mehrerer der Knoten (34, ..., 68),
- aktuellen Gruppenmerkmalen einer oder mehrerer der Gruppen (30, 40, 50, 60),
- einer Anzahl von Benutzern (24) in den mehrfachen Erfassungsbereichen (32, 42, 52, 62) des Funkfrequenzsystems (100), die die gleichbleibende Latenz erfährt, und
- einer Anforderung an eine Erkennungsrate falscher Ereignisse.

7. Funkfrequenzsystem (100) nach mindestens einem der Ansprüche 1 bis 6, wobei das Funkfrequenzsystem (100) zum Durchführen der funkfrequenzbasierten Erfassung und Reagieren auf das durch die funkfrequenzbasierte Erfassung erkannte Ereignis derart konfiguriert ist, dass der Latenzbereich, die gleichbleibende Latenz oder beide im Laufe der Zeit unter einem jeweiligen Schwellenwert bleiben.

8. Funkfrequenzsystem (100) nach mindestens einem der Ansprüche 1 bis 7, wobei die zwei oder mehr Gruppen (30, 40 50, 60) unterschiedliche Gruppenmerkmale aufweisen, einschließlich eines oder mehrerer von:
- einer unterschiedlichen Anzahl von Knoten (34, ..., 68),
- unterschiedlicher Fähigkeiten eines oder mehrerer Knoten (34, ..., 68),
- unterschiedlicher, aktueller freier Rechenleistung und
- unterschiedlicher aktueller Ladung.

9. Funkfrequenzsystem (100) nach mindestens einem der Ansprüche 1 bis 8, wobei der Latenzbereich zwischen 0 s und 0,2 s liegt.

10. Funkfrequenzsystem (100) nach mindestens einem der Ansprüche 1 bis 9, wobei das Funkfrequenzsystem (100) zum Anpassen von mindestens einer der zwei oder mehr der Gruppen (40, 50, 60) derart konfiguriert ist, dass sie die funkfrequenzbasierte Erfassung durchführen und auf das durch die funkfrequenzbasierte Erfassung erkannte Ereignis mit der gleichbleibenden Latenz oder mindestens mit einer Latenz innerhalb des Latenzbereichs um die gleichbleibende Latenz reagieren, basierend auf dem Anpassen einer funkfrequenzbasierten Erfassungsaktivität von mindestens einer der Gruppen (40, 50, 60), dem Anpassen einer Reaktionsaktivität von mindestens einer der Gruppen (40) oder beidem.

11. Funkfrequenzsystem (100) nach mindestens einem der Ansprüche 1 bis 10, wobei das Funkfrequenzsystem (100) konfiguriert ist zum
- Bereitstellen einer Latenzkritikalitätsrangfolge eines oder mehrerer Ereignisse, die durch die zwei oder mehr Gruppen (30, 40, 50, 60) durch Durchführen der funkfrequenzbasierten Erfassung zu erkennen sind, und
- Bestimmen der gleichbleibenden Latenz, des Latenzbereichs oder beider basierend auf der Latenzkritikalitätsrangfolge.

12. Verfahren zum Durchführen einer funkfrequenzbasierten Erfassung und Reagieren auf ein durch die funkfrequenzbasierte Erfassung erkanntes Ereignis mit einer gleichbleibenden Latenz oder mindestens mit einer Latenz innerhalb eines Latenzbereichs um die gleichbleibende Latenz in einem Funkfrequenzsystem, umfassend mehrfache Knoten, die in mehrfachen Gruppen gruppiert sind, wobei jede der Gruppen zum Durchführen der funkfrequenzbasierten Erfassung in einem jeweiligen Erfassungsbereich von mehrfachen Erfassungsbereichen des Funkfrequenzsystems konfiguriert ist, wobei das Verfahren durch das Funkfrequenzsystem durchgeführt wird und die Schritte umfasst:
- Bestimmen einer Latenz von zwei oder mehr der Gruppen zum Durchführen der funkfrequenzbasierten Erfassung und Reagieren auf das durch die funkfrequenzbasierte Erfassung erkannte Ereignis,
- Bestimmen der gleichbleibenden Latenz basierend auf den bestimmten Latenzen, und
- Anpassen von mindestens einer der zwei oder mehr der Gruppen derart, dass sie die funkfrequenzbasierte Erfassung durchführen und auf das durch die funkfrequenzbasierte Erfassung erkannte Ereignis mit der gleichbleibenden Latenz oder mindestens mit einer Latenz innerhalb eines Latenzbereichs um die gleichbleibende Latenz reagieren.

13. Verfahren nach Anspruch 12, umfassend einen oder mehrere der Schritte:
- Optimieren der Latenz einer oder mehrerer Gruppen mit einer Latenz gleich oder über der gleichbleibenden Latenz, um den Latenzbereich, die gleichbleibende Latenz oder beide zu minimieren,
- Erhöhen einer Nachrichtenrate zum Optimieren der Latenz der einen oder der mehreren Gruppen mit einer Latenz, die gleich oder über der gleichbleibenden Latenz ist,
- Erhöhen der Sendeleistung zum Optimieren der Latenz der einen oder der mehreren Gruppen mit einer Latenz gleich oder über der gleichbleibenden Latenz,
- Entfernen eines oder mehrerer Knoten der einen oder der mehreren Gruppen mit einer Latenz gleich oder über der gleichbleibenden Latenz zum Optimieren der Latenz der einen oder der mehreren Gruppen mit einer Latenz gleich oder über der gleichbleibenden Latenz,
- Hinzufügen eines oder mehrerer Knoten zu der einen oder den mehreren Gruppen mit einer Latenz gleich oder über der gleichbleibenden Latenz zum Optimieren der Latenz der einen oder mehreren Gruppen mit einer Latenz gleich oder über der gleichbleibenden Latenz,
- Verringern einer funkfrequenzbasierten Erfassungsaktivität einer oder mehrerer Gruppen, angrenzend an die eine oder die mehreren Gruppen mit einer Latenz gleich oder über der gleichbleibenden Latenz, zum Optimieren der Latenz der einen oder der mehreren Gruppen mit einer Latenz gleich oder über der gleichbleibenden Latenz,
- Wiederausgleichen des drahtlosen Kommunikationsverkehrs, um die durch den drahtlosen Kommunikationsverkehr verursachte drahtlose Störung zu verringern, zum Optimieren der Latenz der einen oder der mehreren Gruppen mit einer Latenz gleich oder über der gleichbleibenden Latenz,
- Bestimmen einer minimalen Latenz einer Gruppe mit einer höchsten Latenz der bestimmten Latenzen der zwei oder mehr der Gruppen zum Durchführen der funkfrequenzbasierten Erfassung und Reagieren auf das durch die funkfrequenzbasierte Erfassung erkannte Ereignis,
- Bestimmen der gleichbleibenden Latenz, des Latenzbereichs oder beider basierend auf der minimalen Latenz,
- Bestimmen der gleichbleibenden Latenz, des Latenzbereichs oder beider basierend auf einem aktuellen Kontext,
- Durchführen einer funkfrequenzbasierten Erfassung und Reagieren auf das durch die funkfrequenzbasierte Erfassung erkannte Ereignis derart, dass der Latenzbereich, die gleichbleibende Latenz oder beide im Laufe der Zeit unter einem jeweiligen Schwellenwert bleiben,
- Anpassen von mindestens einer der zwei oder mehr der Gruppen derart, dass sie die funkfrequenzbasierte Erfassung durchführen und auf das durch die funkfrequenzbasierte Erfassung erkannte Ereignis mit der gleichbleibenden Latenz oder mindestens mit einer Latenz innerhalb des Latenzbereichs um die gleichbleibende Latenz reagieren, basierend auf dem Anpassen der funkfrequenzbasierten Erfassungsaktivität von mindestens einer der Gruppen, Anpassen einer Reaktionsaktivität von mindestens einer der Gruppen oder beidem,
- Bereitstellen einer Latenzkritikalitätsrangfolge eines oder mehrerer Ereignisse, die durch die zwei oder mehr Gruppen durch Durchführen der funkfrequenzbasierten Erfassung zu erkennen sind, und
- Bestimmen der gleichbleibenden Latenz, des Latenzbereichs oder beider basierend auf der Latenzkritikalitätsrangfolge.

14. Computerprogrammprodukt zum Durchführen der funkfrequenzbasierten Erfassung und Reagieren auf ein durch die funkfrequenzbasierte Erfassung erkanntes Ereignis mit einer gleichbleibenden Latenz oder mindestens mit einer Latenz innerhalb eines Latenzbereichs um die gleichbleibende Latenz, wobei das Computerprogrammprodukt Programmcodemittel zum Verursachen umfasst, dass ein Prozessor (16) das Verfahren nach Anspruch 12 oder 13 vornimmt, wenn das Computerprogrammprodukt auf dem Prozessor (16) ablaufen gelassen wird.

15. Computerlesbares Medium (18), das das Computerprogrammprodukt nach Anspruch 14 gespeichert aufweist.

## Revendications

1. Système radiofréquence (100) permettant de réaliser une détection basée sur la radiofréquence et de réagir à un événement détecté par la détection basée sur la radiofréquence avec une latence constante ou au moins avec une latence au sein d'une plage de latence autour de la latence constante, dans lequel le système radiofréquence (100) comprend de multiples noeuds (34, 36, 38, 44, 46, 54, 56, 64, 65, 66, 67, 68) regroupés en de multiples groupes (30, 40, 50, 60), chacun des groupes (30, 40, 50, 60) étant conçu pour réaliser une détection basée sur la radiofréquence dans une zone de détection respective (32, 42, 52, 62) de multiples zones de détection (32, 42, 52, 62) du système radiofréquence (100), dans lequel le système radiofréquence (100) est conçu pour :
- déterminer une latence de deux ou plus des groupes (30, 40, 50, 60) pour réaliser la détection basée sur la radiofréquence et réagir à l'événement détecté par la détection basée sur la radiofréquence,
- déterminer la latence constante en fonction des latences déterminées, et
- adapter au moins l'un des deux ou plus des groupes (30, 40, 50, 60) de telle sorte qu'ils réalisent une détection basée sur la radiofréquence et réagissent à l'événement détecté par la détection basée sur la radiofréquence avec la latence constante ou au moins avec une latence au sein d'une plage de latence autour de la latence constante.

2. Système radiofréquence (100) selon la revendication 1, dans lequel le système radiofréquence (100) est conçu pour optimiser la latence d'un ou plusieurs groupes (50) avec une latence égale ou supérieure à la latence constante afin de réduire au minimum la plage de latence, la latence constante, ou les deux.

3. Système radiofréquence (100) selon la revendication 2, dans lequel le système radiofréquence (100) est conçu pour optimiser la latence des un ou plusieurs groupes (50) avec une latence égale ou supérieure à la latence constante en fonction d'un ou plusieurs parmi :
- l'augmentation d'un taux de messagerie,
- l'augmentation d'une puissance d'émission,
- la suppression d'un ou plusieurs noeuds (54, 56) des un ou plusieurs groupes (50) avec une latence égale ou supérieure à la latence constante,
- l'ajout d'un ou plusieurs noeuds (67, 68) aux un ou plusieurs groupes (50) avec une latence égale ou supérieure à la latence constante,
- la réduction d'une l'activité de détection basée sur la radiofréquence d'un ou plusieurs groupes (40, 60) adjacents aux un ou plusieurs groupes (50) avec une latence égale ou supérieure à la latence constante, et
- le rééquilibrage du trafic de communication sans fil afin de réduire les interférences sans fil provoquées par le trafic de communication sans fil.

4. Système radiofréquence (100) selon au moins l'une des revendications 1 à 3, dans lequel le système radiofréquence (100) est conçu pour :
- déterminer une latence minimale d'un groupe (50) avec la latence la plus élevée parmi les latences déterminées des deux ou plus des groupes (30, 40, 50, 60) pour réaliser une détection basée sur la radiofréquence et réagir à l'événement détecté par la détection basée sur la radiofréquence, et
- déterminer la latence constante, la plage de latence ou les deux en fonction de la latence minimale.

5. Système radiofréquence (100) selon au moins l'une des revendications 1 à 4, dans lequel le système radiofréquence (100) est conçu pour déterminer la latence constante, la plage de latence, ou les deux, en fonction d'un contexte actuel.

6. Système radiofréquence (100) selon la revendication 5, dans lequel le contexte actuel comporte un ou plusieurs parmi :
- une application de détection d'un ou plusieurs groupes (30, 40, 50, 60),
- une exigence de latence d'un ou plusieurs groupes (30, 40, 50, 60),
- un événement prévu dans une ou plusieurs des multiples zones de détection (32, 42, 52, 62),
- une taille d'une ou plusieurs des zones de détection (32, 42, 52, 62),
- une forme d'une ou plusieurs des zones de détection (32, 42, 52, 62),
- une exigence en matière de consommation de puissance radio,
- une exigence en matière de puissance d'émission radio,
- une exigence en matière de forme du faisceau radio,
- une exigence en matière de formation de faisceaux de réception radio,
- un emplacement actuel du système radiofréquence (100),
- un emplacement actuel d'au moins l'un des noeuds (34, ..., 68),
- un emplacement actuel d'une entité tangible (24) dans les multiples zones de détection (32, 42, 52, 62),
- des caractéristiques d'une entité tangible (24) dans l'une des zones de détection (32, 42, 52, 62),
- une date actuelle,
- un mode de fonctionnement actuel d'un ou plusieurs des groupes (30, 40, 50, 60),
- des effets environnementaux dans une ou plusieurs des multiples zones de détection (32, 42, 52, 62),
- une largeur de bande actuellement disponible dans une ou plusieurs des multiples zones de détection (32, 42, 52, 62),
- des capacités actuelles d'un ou plusieurs des noeuds (34, ..., 68),
- des propriétés de groupe actuelles d'un ou plusieurs des groupes (30, 40, 50, 60),
- un certain nombre d'utilisateurs (24) dans les multiples zones de détection (32, 42, 52, 62) du système radiofréquence (100) subissant la latence constante, et
- une exigence en matière de taux de détection des faux événements.

7. Système radiofréquence (100) selon au moins l'une des revendications 1 à 6, dans lequel le système radiofréquence (100) est conçu pour réaliser une détection basée sur la radiofréquence et réagir à l'événement détecté par la détection basée sur la radiofréquence de telle sorte que la plage de latence, la latence constante ou les deux restent en dessous d'une valeur seuil respective au fil du temps.

8. Système radiofréquence (100) selon au moins l'une des revendications 1 à 7, dans lequel les deux groupes ou plus (30, 40, 50, 60) ont des propriétés de groupe différentes comportant un ou plusieurs parmi :
- un nombre différent de noeuds (34, ..., 68),
- différentes capacités d'un ou plusieurs noeuds (34, ..., 68),
- différentes puissances de traitement libres actuelles, et
- différentes charges de courant.

9. Système radiofréquence (100) selon au moins l'une des revendications 1 à 8, dans lequel la plage de latence est comprise entre 0 s et 0,2 s.

10. Système radiofréquence (100) selon au moins l'une des revendications 1 à 9, dans lequel le système radiofréquence (100) est conçu pour adapter au moins l'un des deux ou plus des groupes (40, 50, 60) de telle sorte qu'ils réalisent une détection basée sur la radiofréquence et réagissent à l'événement détecté par la détection basée sur la radiofréquence avec la latence constante ou au moins avec une latence au sein de la plage de latence autour de la latence constante en fonction de l'ajustement d'une activité de détection basée sur la radiofréquence d'au moins un des groupes (40, 50, 60), de l'ajustement d'une activité de réaction d'au moins un des groupes (40), ou des deux.

11. Système radiofréquence (100) selon au moins l'une des revendications 1 à 10, dans lequel le système radiofréquence (100) est conçu pour
- fournir un classement de criticité de latence d'un ou plusieurs événements qui doivent être détectés par les deux groupes ou plus (30, 40, 50, 60) en réalisant une détection basée sur la radiofréquence, et
- déterminer la latence constante, la plage de latence, ou les deux, en fonction du classement de criticité de latence.

12. Procédé permettant de réaliser une détection basée sur la radiofréquence et de réagir à un événement détecté par la détection basée sur la radiofréquence avec une latence constante ou au moins avec une latence au sein d'une plage de latence autour de la latence constante dans un système radiofréquence comprenant de multiples noeuds regroupés en de multiples groupes, chacun des groupes étant conçu pour réaliser une détection basée sur la radiofréquence dans une zone de détection respective de multiples zones de détection du système radiofréquence, le procédé étant réalisé par le système radiofréquence et comprenant les étapes consistant à :
- déterminer une latence de deux ou plus des groupes pour réaliser la détection basée sur la radiofréquence et réagir à l'événement détecté par la détection basée sur la radiofréquence,
- déterminer la latence constante en fonction des latences déterminées, et
- adapter au moins l'un des deux ou plus des groupes de telle sorte qu'ils réalisent une détection basée sur la radiofréquence et réagissent à l'événement détecté par la détection basée sur la radiofréquence avec la latence constante ou au moins avec une latence au sein d'une plage de latence autour de la latence constante.

13. Procédé selon la revendication 12, comprenant une ou plusieurs des étapes consistant à :
- optimiser la latence d'un ou plusieurs groupes avec une latence égale ou supérieure à la latence constante afin de réduire au minimum la plage de latence, la latence constante, ou les deux,
- augmenter un taux de messagerie pour optimiser la latence des un ou plusieurs groupes avec la latence égale ou supérieure à la latence constante,
- augmenter la puissance d'émission pour optimiser la latence des un ou plusieurs groupes avec la latence égale ou supérieure à la latence constante,
- supprimer un ou plusieurs noeuds des un ou plusieurs groupes avec la latence égale ou supérieure à la latence constante afin d'optimiser la latence des un ou plusieurs groupes avec la latence égale ou supérieure à la latence constante,
- ajouter un ou plusieurs noeuds aux un ou plusieurs groupes avec la latence égale ou supérieure à la latence constante afin d'optimiser la latence des un ou plusieurs groupes avec la latence égale ou supérieure à la latence constante,
- réduire une activité de détection basée sur la radiofréquence d'un ou plusieurs groupes adjacents aux un ou plusieurs groupes avec la latence égale ou supérieure à la latence constante, afin d'optimiser la latence des un ou plusieurs groupes avec la latence égale ou supérieure à la latence constante,
- rééquilibrer le trafic de communication sans fil afin de réduire les interférences sans fil provoquées par le trafic de communication sans fil pour optimiser la latence des un ou plusieurs groupes avec la latence égale ou supérieure à la latence constante,
- déterminer une latence minimale d'un groupe avec la latence la plus élevée parmi les latences déterminées des deux ou plus des groupes pour réaliser une détection basée sur la radiofréquence et réagir à l'événement détecté par la détection basée sur la radiofréquence,
- déterminer la latence constante, la plage de latence ou les deux en fonction de la latence minimale,
- déterminer la latence constante, la plage de latence ou les deux en fonction d'un contexte actuel,
- réaliser une détection basée sur la radiofréquence et réagir à l'événement détecté par la détection basée sur la radiofréquence de telle sorte que la plage de latence, la latence constante, ou les deux restent en dessous d'une valeur seuil respective au fil du temps,
- adapter au moins l'un des deux ou plus des groupes de telle sorte qu'ils réalisent une détection basée sur la radiofréquence et réagissent à l'événement détecté par la détection basée sur la radiofréquence avec la latence constante ou au moins avec une latence au sein de la plage de latence autour de la latence constante, en fonction de l'ajustement d'une activité de détection basée sur la radiofréquence d'au moins l'un des groupes, l'ajustement d'un activité de réaction d'au moins l'un des groupes, ou les deux,
- fournir un classement de criticité de latence d'un ou plusieurs événements qui doivent être détectés par les deux groupes ou plus en réalisant une détection basée sur la radiofréquence, et
- déterminer la latence constante, la plage de latence, ou les deux, en fonction du classement de criticité de latence.

14. Produit programme d'ordinateur pour réaliser une détection basée sur la radiofréquence et réagir à un événement détecté par la détection basée sur la radiofréquence avec une latence constante ou au moins avec une latence au sein d'une plage de latence autour de la latence constante, dans lequel le produit programme d'ordinateur comprend des moyens de code de programme pour amener un processeur (16) à effectuer le procédé selon la revendication 12 ou 13, lorsque le produit programme d'ordinateur est exécuté sur le processeur (16).

15. Support lisible par ordinateur (18) sur lequel est stocké le produit programme d'ordinateur selon la revendication 14.
